# FASCICULE DE BREVET EUROPEEN

(11) **EP 3 745 842 B1**
(45) Date de publication et mention de la délivrance du brevet: **08.05.2024**
(21) Numéro de dépôt: 19707862.9
(22) Date de dépôt: 01.02.2019
(51) Int. Cl.: A01G 9/24, E04F 10/08, H02S 20/23, E04B 1/00, E04B 1/343, F24S 25/00, H02S 30/20, E04F 10/10, F24S 25/67, H02S 20/10, H02S 30/00

(54) **PROCÉDÉ ET KIT DE CONSTRUCTION DE STRUCTURE DE PROTECTION**
VERFAHREN ZUR HERSTELLUNG EINER SCHUTZSTRUKTUR UND KIT DAFÜR
METHOD FOR BUILDING A PROTECTIVE STRUCTURE AND KIT THEREFOR

(30) Priorité: 01.02.2018 FR 1850853
(43) Date de publication de la demande: 09.12.2020
(73) Titulaire: MONKILOWATT, 31000 Toulouse (FR)
(72) Inventeur: LALANE, Jean-Marc, 31000 Toulouse (FR)
(74) Mandataire: Brevalex
(86) Numéro de dépôt international: PCT/FR2019/050233
(87) Numéro de publication internationale: WO 2019/150055

(56) Documents cités:
- WO-A1-2016/113287
- WO-A1-2017/156848
- JP-A- 2017 175 800
- US-A1- 2013 186 450
- US-A1- 2016 173 025

## Description

### DOMAINE TECHNOLOGIQUE

L'invention concerne deux procédés de construction de structure de protection, et deux kits de construction de structure de protection et par extension, la structure de protection obtenue à partir du procédé de construction. L'invention concerne tout particulièrement, mais pas uniquement, le cas où les panneaux de la structure de protection sont des panneaux photovoltaïques.

### ARRIERE-PLAN TECHNOLOGIQUE

Dans le présent document, l'expression « structure de protection » désigne toute structure comprenant des panneaux placés les uns à côté des autres, en général horizontalement, et qui est ainsi susceptible de constituer un abri, ou du moins d'apporter une certaine protection. Les panneaux en effet peuvent apporter une protection plus ou moins complète contre la pluie, le soleil et les autres aléas climatiques. La structure de protection peut par exemple être un bâtiment, ou encore tout au moins une structure de bâtiment. L'expression « structure de protection » n'implique pas que les panneaux soient jointifs, et encore moins étanches.

On connaît par exemple par le document WO2008028677 une toiture solaire constituée de panneaux solaires montés sur des poteaux.

Cette toiture présente avantageusement une surface importante et permet donc de constituer une structure de protection de grande surface. Cependant, la construction de cette toiture est relativement complexe et le temps nécessaire pour monter celle-ci est important.

US 2016/173025 A1 divulgue un procédé de construction d'une structure de protection et un kit de construction de structure de protection.

Il existe donc un besoin d'un procédé de construction, d'un kit de construction, permettant de construire une structure de protection de manière simple et rapide.

Ce besoin existe particulièrement dans le cas où le toit de la structure de protection ainsi construite comporte des panneaux photovoltaïques. La structure de protection peut alors être connectée à un réseau de distribution d'électricité et/ou à un système de stockage d'électricité pour fournir de l'électricité.

### OBJET ET RESUME DE L'INVENTION

Un premier objectif de l'invention est de proposer un procédé de construction, permettant de construire une structure de protection de relativement grande surface de manière simple et rapide.

Cet objectif est atteint grâce à un procédé de construction de structure de protection, comprenant les caractéristiques de la revendication 1 et un procédé de construction d'une structure de protection comprenant les caractéristiques de la revendication 2.

A l'étape d2), plusieurs panneaux en place sur les rails porteurs peuvent être groupés et déplacés ensemble, formant un 'train de panneaux'.

Pendant l'étape d), en fonction du mode de mise en oeuvre choisi, les étapes d1) et d2) peuvent selon le cas être réalisées séquentiellement, ou de manière simultanée (ou de manière en partie simultanée). Les étapes d1) et d2) sont généralement répétées, autant de fois que nécessaire. Par ailleurs, les transferts successifs des différents panneaux peuvent se chevaucher partiellement (dans le temps). Par exemple, la fin du transfert d'un panneau peut se faire en même temps que le début du transfert du panneau suivant.

L'expression 'soulever un panneau vers le haut' signifie ici déplacer le panneau de telle sorte que le centre de gravité du panneau, à l'issue du déplacement, se trouve à une plus grande hauteur qu'au début.

Un ou plusieurs des panneaux peuvent être des panneaux photovoltaïques. Plus généralement, chacun des panneaux peut avoir toute fonction envisageable ; notamment les fonctions remplies par une toiture : protection contre les intempéries, isolation thermique, phonique, et/ou contre le soleil, etc.

Un deuxième objectif de l'invention est de proposer un kit de construction, permettant de construire une structure de protection de relativement grande surface de manière simple et rapide.

Cet objectif est atteint grâce à un kit de construction de structure de protection, comprenant les caractéristiques de la revendication 12 et un kit de construction de structure de protection comprenant les caractéristiques de la revendication 13.

Le kit de construction est ainsi configuré de manière à permettre la construction d'une structure de protection en mettant en oeuvre le procédé de construction de structure de protection défini précédemment.

De plus, le kit de construction peut être configuré de manière à permettre la construction d'une structure de protection en mettant en oeuvre tout procédé de construction de structure de protection conforme à la présente divulgation.

La présente divulgation concerne également une structure de protection obtenue à partir d'un kit de construction tel que défini ci-dessus.

La structure de protection obtenue présente une structure simple dans laquelle un ensemble de panneaux sont disposés côte à côte sur une structure porteuse. Les panneaux sont portés par deux rails porteurs (ou plus) qui servent pendant la construction à guider les panneaux jusqu'à ce qu'ils atteignent leur position finale sur la structure porteuse, et qui servent ensuite de support aux panneaux, éventuellement de manière permanente.

Ledit au moins un panneau est de forme générale rectangulaire ; et en position d'insertion et/ou en position finale, ou encore continûment lors du déplacement dudit au moins un panneau à l'étape d2) de la position d'insertion à la position finale, chaque angle dudit au moins un panneau repose directement ou indirectement sur les rails porteurs via au moins un point d'appui situé à une faible distance de l'angle considéré.

L'expression 'une faible distance' signifie ici une distance inférieure à 50%, et de préférence inférieure à 20%, de la longueur du panneau considéré mesurée suivant la direction de montage.

Cette disposition permet que ledit un panneau soit en appui stable sur les rails porteurs, en étant supporté par ceux-ci à la fois par son côté avant et son côté arrière.

En position d'insertion et/ou en position finale, ou dans toute position intermédiaire, ledit au moins un panneau est en appui sur la structure porteuse de telle sorte que, même si aucune traction horizontale n'est appliquée audit au moins un panneau, ledit panneau reste en appui stable sur les rails porteurs.

De préférence, le côté avant et le côté arrière dudit au moins un panneau reposent directement ou indirectement sur les rails porteurs via une pluralité de points d'appui en transmettant uniquement à ceux-ci une force verticale (résultant du poids des panneaux), mais sans composante horizontale.

De même, dans un mode préférentiel de mise en oeuvre du procédé, à l'issue de la construction de la structure de protection, les panneaux se maintiennent en position finale sans qu'aucune force horizontale extérieure ne leur soit appliquée.

Dans un mode de réalisation, pour ledit au moins un panneau, en position finale, un côté avant et/ou un côté arrière dudit au moins un panneau est/sont en appui sur les rails porteurs, sans que ledit au moins un panneau ne soit en appui, même partiel, sur le ou les côté(s) considéré(s), sur un ou des panneau(x) adjacent(s). Le poids du panneau considéré peut être transmis aux rails porteurs directement ou par l'intermédiaire de supports.

A l'inverse, dans un mode de réalisation pour ledit au moins un panneau, en position finale, un côté avant et/ou un côté arrière dudit au moins un panneau est en appui sur les rails porteurs via un ou des panneau(x) adjacent(s).

Le côté arrière ou avant dudit au moins un panneau peut ainsi être configuré de manière, lorsque le panneau est en position finale sur les rails porteurs, à reposer directement ou indirectement (c'est-à-dire par l'intermédiaire d'un connecteur, ou pièce de liaison) sur le(s) panneau(x) adjacent(s).

Dans un mode de réalisation, le transfert des panneaux est fait de manière à constituer progressivement un train de panneaux sur les rails porteurs. L'expression « train de panneaux » désigne un ensemble de panneaux disposés les uns à la suite des autres, et pouvant ainsi se déplacer sur les rails (porteurs) comme un train.

Ce train de panneaux est formé progressivement au fur et à mesure du transfert des panneaux (un par un, ou groupe par groupe) de la position de stockage à la position d'insertion. Si par exemple les panneaux sont transférés un par un, dans un mode de réalisation, après chaque transfert d'un panneau de sa position de stockage à la position d'insertion (qui est une position constante permettant l'insertion des panneaux sur la structure porteuse), le train de panneaux (incluant le panneau qui vient d'être transféré) est déplacé suivant la direction de montage, de manière à libérer la position d'insertion sur la structure porteuse et ainsi à permettre le transfert du panneau suivant en position d'insertion.

Les panneaux sont des structures sous forme de coques minces. Ils sont généralement sensiblement plans, mais pas nécessairement. Les panneaux sont normalement des panneaux rigides, non-articulés.

Les panneaux sont normalement de forme rectangulaire, avec un côté avant, un côté arrière et deux côtés latéraux. Le côté avant d'un panneau est celui qui est à l'avant du panneau pendant son transfert à l'étape d).

Les panneaux peuvent être notamment des panneaux photovoltaïques. Un panneau photovoltaïque est un panneau comportant un ou plusieurs modules photovoltaïques ; un module photovoltaïque étant un composant de forme générale plane capable de générer de l'énergie électrique à partir de la lumière du soleil.

Les panneaux peuvent notamment être de grande dimension (plus de quatre mètres, voire cinq mètres de long), peuvent peser plus de 75 kg, voire plusieurs centaines de kg, étant alors trop lourds pour être transportés à la main.

En position de stockage, les panneaux sont normalement stockés dans un conteneur.

Un conteneur désigne ici tout emballage adapté pour le stockage, en particulier le stockage de panneaux, notamment de panneaux de forme parallélipipédique. Les conteneurs peuvent notamment être des conteneurs standardisés pour le transport routier ou maritime, par exemple des conteneurs conformes à la norme ISO 6346, notamment de longueur 20 pieds ou 40 pieds.

De préférence, en position de stockage les panneaux sont stockés au voisinage du sol ; par exemple dans un conteneur placé sur le sol.

Grâce au dispositif de transfert, lorsque l'on met en oeuvre le procédé de construction selon l'invention, les panneaux sont soulevés mécaniquement par le dispositif de transfert pour passer de leur position initiale, dite « position de stockage », à une position intermédiaire dite « position d'insertion », dans laquelle ils sont en appui sur les rails porteurs.

On comprend qu'en position de stockage, le centre de gravité d'un panneau est à une hauteur (une altitude) plus faible que lorsque le panneau est en position d'insertion en appui sur les rails porteurs.

De préférence, les rails porteurs s'étendent suivant une direction horizontale.

Avantageusement, le dispositif de transfert, en soulevant les panneaux, réalise donc la plus grande partie de l'effort mécanique de transfert des panneaux de la position de stockage à la position finale des panneaux, sur la structure porteuse.

Le procédé est donc particulièrement adapté au cas où les panneaux sont stockés au niveau du sol, le conteneur étant posé sur le sol, et où la structure porteuse est construite de telle sorte que les rails porteurs sont situés à une certaine hauteur au-dessus du sol, par exemple à au moins 1,7 mètres ou plus préférentiellement au moins 2,2 mètres au-dessus du sol.

Lorsque les rails porteurs sont situés à une telle hauteur, il est possible de se tenir debout sous la structure de protection obtenue, les panneaux constituant alors le toit de la structure de protection.

La mise en oeuvre du procédé selon la présente divulgation ne présente pas de difficultés. On transfère chacun des panneaux du conteneur (ou du moins, de sa position de stockage) à une position d'insertion sur les rails porteurs ; les panneaux s'insèrent sur les rails porteurs en formant une sorte de train, et coulissent le long des rails porteurs jusqu'à atteindre leur position finale sur la structure porteuse.

Dans un mode de réalisation, les panneaux sont placés sur les rails porteurs sans être liés les uns aux autres. Il peut par exemple dans ce cas être prévu de pousser les panneaux depuis la position d'insertion jusqu'à la position finale sur la structure porteuse ; cette poussée peut par exemple se faire en ne poussant que sur le dernier panneau intégré au train de panneaux. Les panneaux peuvent aussi se déplacer sous l'effet de leur propre poids, si les rails porteurs sont en pente.

Dans un autre mode de réalisation, à l'étape d1), au plus tard à la fin de son transfert, ledit au moins un panneau transféré est accroché aux autres panneaux du train de panneaux.

Ainsi, les différents panneaux du train de panneaux sont solidaires les uns des autres sur le train de panneau. Comme dans le cas précédent, les panneaux peuvent être poussés pour être déplacés de la position d'insertion à la position finale. Cependant, ce mode de réalisation permet aussi que, simplement en tirant sur l'un des panneaux, notamment le panneau avant, il est possible de déplacer l'ensemble des panneaux du train de panneaux le long des rails porteurs, pour les placer à la position voulue sur la structure porteuse.

Dans un mode de réalisation, des panneaux adjacents sont couplés deux à deux lorsqu'ils sont intégrés au sein du train de panneaux. Par exemple, un côté avant ou un côté arrière d'au moins un panneau peut être configuré de manière à pouvoir transmettre une traction au panneau suivant, directement ou via un connecteur. La liaison entre panneaux adjacents peut servir à transmettre une force de traction ou de poussée suivant la direction des rails porteurs. Elle peut aussi servir à transmettre une force suivant la direction verticale, comme cela sera détaillé plus loin.

De nombreuses possibilités sont envisageables quant au dispositif de transfert.

Notamment, tout en restant dans le cadre de l'invention, un panneau peut être sollicité (tracté, poussé, guidé, etc.) de différentes manières pour passer de sa position de stockage à sa position d'insertion. Conformément à l'invention, au cours du transfert à l'étape d1) le panneau est placé à une position d'insertion, dans laquelle le panneau est placé à l'arrière du dernier panneau du train de panneaux et ainsi intégré au train de panneau.

On considère maintenant le cas générique d'un panneau dit « premier panneau », devant être intégré au train de panneaux et d'un « deuxième panneau », destiné à être engagé sur les rails porteurs à la suite du premier panneau.

Pour conduire le deuxième panneau à se placer dans la position d'insertion à la suite du premier panneau, dans un mode de mise en oeuvre, un côté avant du premier panneau, ou un côté arrière d'un panneau placé sur les rails porteurs à l'avant du premier panneau est accroché à un côté avant du deuxième panneau, notamment pendant le transfert et au plus tard à l'issue du transfert du premier panneau.

Cette opération peut notamment être réalisée pendant le transfert et au plus tard à l'issue du transfert du premier panneau.

Du fait de cette liaison entre le train de panneau ou le premier panneau et le deuxième panneau, lorsque le train de panneaux intégrant le premier panneau est déplacé sur les rails porteurs à l'étape d2), le deuxième panneau est soumis également à une traction ce qui le contraint à se positionner à l'arrière du premier panneau.

Selon une variante de ce mode de mise en oeuvre, le train de panneau (qui n'inclut pas à ce stade le premier panneau) ou un côté avant du premier panneau est accroché au côté avant du deuxième panneau. Avantageusement, ce mode de réalisation n'impose pas une trajectoire compliquée pour le premier panneau, ou un moyen de connexion compliqué avec le deuxième panneau. Par exemple, un câble ou plus généralement un connecteur non extensible peut être utilisé pour assurer la liaison entre le train de panneaux ou le côté avant du premier panneau et le côté avant du deuxième panneau.

Selon une variante de ce mode de mise en oeuvre, à l'étape d), pendant le transfert du premier panneau, on fait passer un côté arrière du premier panneau à proximité d'un côté avant du deuxième panneau, et on relie une moitié arrière du premier panneau à un côté avant du deuxième panneau. Cette liaison est faite généralement avec un connecteur approprié. Une fois que le connecteur est en place, il permet au premier panneau de tirer le deuxième panneau. Le connecteur peut être mis en place à la main ou de manière mécanisée.

Le connecteur entre le train de panneau ou le premier panneau et le deuxième panneau est configuré de telle sorte que, lorsque le premier et le deuxième panneau ont été intégrés au train de panneaux, le deuxième panneau est disposé derrière le premier panneau. Par suite, si on tracte le train de panneaux avec le premier panneau, le deuxième panneau est tiré à la suite du premier panneau.

De manière alternative, dans un mode de mise en oeuvre de la présente invention, en position de stockage, les panneaux sont stockés en zig-zag, et un côté avant de chaque panneau est accroché à un côté arrière du panneau précédent.

Pour faciliter le transfert des panneaux de la position de stockage à la structure porteuse, de préférence des rails de transfert peuvent être prévus pour supporter le poids des panneaux du conteneur pendant leur transfert de la position de stockage jusqu'à leur position d'insertion sur la structure porteuse. Les rails de transfert peuvent être horizontaux ou non ; dans ce dernier cas, ils servent à compenser ou rattraper une différence de hauteur entre la hauteur des panneaux en position de stockage et la hauteur qu'ils atteignent une fois disposés sur la structure porteuse.

L'utilisation de rails de transfert est particulièrement efficace lorsque les panneaux sont stockés en appui sur des rails de stockage.

Pour cette raison, selon la présente divulgation, les panneaux sont fournis à l'étape a) stockés dans un conteneur comportant des rails de stockage, et en position de stockage, sont en appui sur ces rails de stockage, et le dispositif de transfert comporte des rails de transfert.

Pendant la mise en place du dispositif de transfert à l'étape c), on dispose les rails de transfert de telle sorte que les rails de transfert relient les rails de stockage aux rails porteurs ; et pendant le transfert dudit au moins un panneau de la position de stockage à la position finale, ledit au moins un panneau est déplacé en étant continûment supporté successivement par les rails de stockage, les rails de transfert et les rails porteurs.

Dans un mode de réalisation, pendant la mise en place du dispositif de transfert à l'étape d), on dispose les rails de transfert, ou une partie des rails de transfert, en position inclinée.

Par suite, le dispositif de transfert permet, à l'aide des rails de transfert inclinés, de hisser les panneaux de telle sorte que le haut des panneaux soit plus haut en position finale qu'en position de stockage.

Dans un mode de réalisation, les panneaux peuvent être directement en appui sur les rails de stockage, les rails de transfert, et/ou les rails porteurs (par exemple en ayant sur les côtés latéraux des patins en polyéthylène, voire en téflon).

Dans un autre mode de réalisation, les panneaux peuvent comporter des supports leur permettant de se déplacer sur les rails. Ces supports peuvent notamment comporter des roues permettant aux panneaux de rouler sur les rails porteurs, et le cas échéant sur les rails de stockage et éventuellement les rails de transfert.

Dans ce cas par exemple, un côté avant et/ou un côté arrière d'au moins un panneau peut comporter des supports ; ledit panneau est supporté par ces supports, coopérant selon la position du panneau avec les rails de stockage, de transfert et/ou les rails porteurs ; lesdits supports sont configurés pour permettre audit panneau de se déplacer en coulissant par rapport aux rails de stockage, aux rails de transfert et/ou aux rails porteurs.

De préférence, pendant l'étape de transfert d1) de la position de stockage à la position d'insertion, tous les panneaux effectuent un mouvement consistant en un mouvement initial de mise en place dans une position initiale, puis un mouvement principal de la position initiale à la position d'insertion ; le mouvement initial de la position de stockage à la position initiale étant soit une translation soit une rotation, et le mouvement principal étant le même pour tous les panneaux. Le mouvement initial peut être par exemple une translation du panneau considéré le long des rails de stockage.

Le mouvement principal comporte nécessairement au moins un déplacement du centre de gravité du panneau.

Dans un mode de réalisation, le mouvement principal est constitué par la combinaison, simultanée, partiellement simultanée, ou successive, d'un mouvement vertical vers le haut et d'un mouvement dans une direction horizontale.

Le mouvement principal des panneaux peut comporter en outre une ou des rotations. Dans ce cas, ces rotations sont de préférence des rotations par rapport à une même direction fixe et dans le même sens, ou de préférence une seule rotation par rapport à une direction fixe. Cette direction fixe est de préférence parallèle à un axe (longitudinal ou transverse) du conteneur.

Une fois les panneaux en position d'insertion, leur mouvement peut être simplement une translation.

Ainsi dans un mode de réalisation, lors de l'étape d2), on déplace ledit au moins un panneau le long des rails porteurs de telle sorte que ledit au moins un panneau effectue une translation_suivant la direction de montage.

Le maintien en position des panneaux doit être assuré au cours des différentes étapes non seulement de la construction de la structure de protection, mais aussi de préférence une fois que la structure de protection est construite.

Aussi dans un mode de réalisation, un côté avant ou arrière d'au moins un panneau comporte des supports de maintien, configurés de telle sorte que, lorsqu'un panneau est engagé sur les rails porteurs, ledit côté avant et/ou le côté arrière du panneau ainsi engagé est maintenu par lesdits supports de maintien ; les supports de maintien engageant les rails porteurs de manière à empêcher un mouvement relatif dudit côté avant et/ou dudit côté arrière du panneau ainsi engagé par rapport aux rails porteurs vers le bas et/ou vers le haut.

Les supports de maintien peuvent notamment prendre appui sur les rails porteurs à des points d'appui situés au voisinage des extrémités du panneau pour assurer la stabilité de celui-ci.

Grâce à ces supports de maintien, le côté avant et/ou le côté arrière du panneau peut être maintenu à la position en hauteur voulue.

Dans un mode de réalisation, en position d'insertion et/ou en position finale, ou encore continûment lors du déplacement dudit au moins un panneau à l'étape d2) de la position d'insertion à la position finale, une partie dudit au moins un panneau est disposée sous une partie de prévention d'envol d'un rail porteur. Le panneau est ainsi empêché notamment de s'envoler s'il y a du vent. La partie de prévention d'envol peut aussi servir de protection contre l'entrée de poussière ou de sable dans les rails porteurs.

Les supports de maintien doivent permettre au panneau de coulisser ou de se déplacer par rapport aux rails porteurs pendant le transfert des panneaux ; ils sont donc différents de boulons de blocage que l'on fixerait en fin de montage. Par exemple, les supports de maintien peuvent comprendre une roue ou un chariot ou un patin de glissement.

Notamment, les supports de maintien peuvent être configurés pour permettre que le(s) panneau(x) soi(en)t déplacé(s) dans la direction opposée à la direction de montage, pour permettre de replier ou de démonter la structure, et par exemple de remettre les panneaux dans le conteneur.

Lorsqu'un panneau est supporté par des supports de maintien à la fois sur son côté avant et son côté arrière, ces supports permettent que le panneau reste en position horizontale stable sur la structure porteuse. Il peut rester dans cette position stable même quand aucune traction n'est appliquée aux panneaux.

La forme des rails peut être optimisée de différentes manières.

Dans un mode de réalisation, les rails porteurs sont des profilés de section constante. Ainsi avantageusement, ils sont réalisés essentiellement sans reprise d'usinage. Tout en gardant une section constante, les rails peuvent comporter quelques ouvertures ou modifications locales, par exemple pour permettre la fixation des rails sur des poteaux, ou autre.

Ils peuvent notamment être constitués par des profilés dont la section a la forme générale de la lettre 'C'.

Ils peuvent notamment comporter une paroi supérieure, qui s'étend dans un plan horizontal, pour empêcher l'entrée de poussières, de sable, dans le rail.

Les rails peuvent comporter des ouvertures en partie basse, pour faciliter la sortie, l'évacuation de poussières ou de sable, hors du rail.

Dans un mode de réalisation préférentiel, les supports de maintien comportent des roues, et les rails porteurs et les roues sont configurés pour que les roues s'engagent à l'intérieur des rails en position d'insertion, puis roulent jusqu'à ce que le panneau atteigne la position finale.

Comme cela a été indiqué précédemment, le dispositif de transfert est agencé de manière à pouvoir soulever les panneaux pour permettre leur transfert sur les rails porteurs.

Le soulèvement du côté avant (ou arrière) des panneaux peut se faire notamment par des tractions appliquées par des câbles. De manière alternative, le soulèvement des panneaux peut résulter de l'appui des panneaux (direct ou indirect) sur un ou des appuies) solidaire de la structure porteuse (ou du sol..).

Ce déplacement vers le haut des différents panneaux peut être de différentes manières, en fonction notamment de la position des panneaux en position de stockage.

Dans un mode de mise en oeuvre, en position de stockage, les panneaux sont disposés horizontalement les uns au-dessus des autres, formant une pile, et les côtés avant des panneaux sont disposés sur un côté latéral du groupe de panneaux.

De préférence dans ce cas, le dispositif de transfert comporte un monte-charge, configuré pour soulever la pile de panneaux. Le terme 'monte-charge' désigne ici tout appareil capable de soulever la pile de panneaux.

Dans un mode de mise en oeuvre particulièrement avantageux, le monte-charge est configuré pour soulever la pile de panneaux sous l'effet d'une traction appliquée au train de panneaux (à l'étape d2)). Le monte-charge peut par exemple comporter un câble qui sert à soulever le plateau sur lequel repose le groupe de panneaux, et qui est relié au câble de traction servant à déplacer le train de panneaux. Par conséquent, simplement en appliquant une traction sur l'un de ces câbles, on peut transférer les panneaux de la position de stockage à la position d'insertion et déplacer le train de panneaux de manière à placer les panneaux en position finale sur la structure porteuse.

Dans un mode de réalisation, le dispositif de transfert est agencé de telle sorte que la pile de panneaux se soulève en se déplaçant en translation verticale vers le haut à partir de la situation de stockage des panneaux dans le conteneur. Dans ce cas, avantageusement le déplacement initial des panneaux est simplement une translation verticale, sans rotation ni déplacement horizontal.

De manière alternative, en position de stockage les panneaux sont disposés verticalement côte à côte, et les côtés avant des panneaux sont disposés sur un côté supérieur du groupe de panneaux.

Lorsque les panneaux sont stockés en position verticale, ils doivent pivoter pour être placés en position d'insertion, en appui sur les rails porteurs. Ce mouvement de pivot ou de rotation peut être fait en prenant appui sur la structure porteuse.

Ainsi le dispositif de transfert comporte un appui solidaire de la structure ; et pendant l'étape d), au moins un panneau entre en contact avec ledit appui ce qui force ledit au moins un panneau à se soulever.

L'appui peut prendre différentes formes : des rampes inclinées, des poulies fixées sur la structure, agissant sur des câbles liés aux panneaux, etc. L'appui indiqué ici est naturellement distinct des rails porteurs (présente des surfaces d'appui qui ne sont pas celles des rails porteurs). L'appui peut comprendre une ou plusieurs barres d'appui horizontales, notamment rotatives, des rails inclinés, etc., distinct des rails porteurs.

L'appui solidaire de la structure porteuse est configuré de telle sorte que, lorsqu'un panneau est déplacé à l'étape c) (en particulier, est déplacé horizontalement), le panneau entre en contact avec l'appui, reçoit une force de réaction de l'appui dirigée au moins en partie vers le haut, qui contraint le panneau à se lever et à atteindre progressivement la hauteur voulue, en position d'insertion.

Par exemple, dans un mode de réalisation l'appui comporte au moins deux rampes inclinées ; un côté avant ou arrière d'au moins un panneau comporte au moins deux supports ; le panneau et les rampes sont configurés de telle sorte que pendant le transfert du panneau, lesdits au moins deux supports du panneau prennent appui respectivement sur lesdites au moins deux rampes, forçant ainsi le panneau à se soulever. Les supports peuvent comprendre des roues pour rouler sur les rampes inclinées.

Dans un mode de réalisation, les rails porteurs comportent une première surface de roulage pour des roues de supports avant d'un panneau ; une deuxième surface de roulage pour des roues de supports arrière d'un panneau ; une ouverture d'insertion pour permettre de positionner les roues arrière du panneau sur la deuxième surface de roulage ; et à l'étape c), pendant le transfert d'au moins un panneau, les roues arrière roulent sur lesdites rampes, puis roulent sur ladite deuxième surface de roulage, en passant par l'ouverture d'insertion au moment où elles passent d'une surface de la rampe à la deuxième surface de roulage.

Il est particulièrement intéressant de combiner ce mode de réalisation avec le mode de réalisation mentionné précédemment dans lequel le conteneur comporte en outre deux rails de stockage et le kit comporte deux rails de transfert, le kit étant configuré de telle sorte que pendant son transfert, un panneau puisse être supporté successivement par les rails de stockage, les rails de transfert et les rails porteurs. Dans ce cas, le côté avant du panneau repose par ses supports avant sur les rails de stockage ; les roues avant roulent sur les rails de stockage, les rails de transfert, la première surface de roulage des rails porteurs. Du côté arrière, les supports arrière du panneau sont soulevés lorsque les roues arrière prennent contact avec les rampes inclinées ; les roues arrière roulent sur les rampes puis sur la deuxième surface de roulage.

L'extrémité avant du train de panneau, ou du moins le côté avant d'un (ou de préférence de tous les) panneau(x) du train de panneau peut être tiré(e) par câble(s) dans la direction de montage. Ainsi dans un mode de réalisation, à l'étape d2) on déplace le train de panneaux à l'aide d'un treuil ; et à l'étape d1), on actionne le dispositif de transfert au moyen du treuil.

Le kit de construction de structure de protection peut présenter de préférence tout ou partie des caractéristiques suivantes. Toutes ou une partie de ces caractéristiques peuvent notamment être combinées les unes aux autres, dans la mesure où cette combinaison est techniquement réalisable.

Le kit de construction peut ainsi être configuré de telle sorte que :
- lesdits panneaux sont de forme générale rectangulaire ; et en position d'insertion et/ou en position finale, ou encore continûment lors du déplacement dudit au moins un panneau à l'étape d2) de la position d'insertion à la position finale, chaque angle dudit au moins un panneau repose directement ou indirectement sur les rails porteurs via au moins un point d'appui situé à une faible distance de l'angle considéré.
- en position finale, un côté avant et/ou un côté arrière dudit au moins un panneau est/sont en appui sur les rails porteurs, sans que ledit au moins un panneau ne soit en appui, même partiel, sur le ou les côtés considéré(s), sur un panneau adjacent.
- en position finale, un côté avant et/ou un côté arrière dudit au moins un panneau est/sont en appui sur les rails porteurs via un ou des panneau(x) adjacent(s).
- les rails porteurs, une fois montés, s'étendent suivant une direction horizontale.
- les panneaux sont fournis à l'étape a) stockés dans un conteneur comportant des rails de stockage, et en position de stockage, sont en appui sur ces rails de stockage ; le dispositif de transfert comporte des rails de transfert ; pendant la mise en place du dispositif de transfert à l'étape c), on dispose les rails de transfert de telle sorte que les rails de transfert relient les rails de stockage aux rails porteurs ; et pendant le transfert dudit au moins un panneau de la position de stockage à la position finale, ledit au moins un panneau est déplacé en étant continûment supporté successivement par les rails de stockage, les rails de transfert et les rails porteurs.
- pendant la mise en place du dispositif de transfert à l'étape d), les rails de transfert sont en position inclinée.
- pendant l'étape de transfert d1) de la position de stockage à la position d'insertion, tous les panneaux effectuent un mouvement consistant en un mouvement initial de mise en place dans une position initiale, puis un mouvement principal de la position initiale à la position d'insertion ; le mouvement initial de la position de stockage à la position initiale étant soit une translation soit une rotation, et le mouvement principal étant exactement le même pour tous les panneaux.
- lors de l'étape d2), on déplace ledit au moins un panneau le long des rails porteurs de telle sorte que ledit au moins un panneau effectue une translation suivant la direction de montage.
- un côté avant d'un premier panneau est accroché à un côté avant d'un deuxième panneau destiné à être engagé sur les rails porteurs à la suite du premier panneau, notamment pendant le transfert et au plus tard à l'issue du transfert du premier panneau.
- à l'étape d), pendant le transfert d'un premier panneau, on fait passer un côté arrière du premier panneau à proximité d'un côté avant d'un deuxième panneau destiné à être engagé sur les rails porteurs à la suite du premier panneau, et on relie une moitié arrière du premier panneau à un côté avant du deuxième panneau.
- un côté avant ou arrière d'au moins un panneau comporte des supports de maintien, configurés de telle sorte que, lorsqu'un panneau est engagé sur les rails porteurs, ledit côté avant et/ou côté arrière du panneau ainsi engagé est maintenu par lesdits supports de maintien ; les supports de maintien engageant les rails porteurs de manière à empêcher un mouvement relatif dudit côté avant et/ou dudit côté arrière du panneau ainsi engagé par rapport aux rails porteurs vers le bas et/ou vers le haut.
- en position d'insertion et/ou en position finale, ou encore continûment lors du déplacement dudit au moins un panneau à l'étape d2) de la position d'insertion à la position finale, une partie dudit au moins un panneau est disposée sous une partie de prévention d'envol d'un rail porteur.
- les rails porteurs sont des profilés de section constante.
- le dispositif de transfert comporte un appui solidaire de la structure ; et pendant l'étape d), au moins un panneau entre en contact avec ledit appui ce qui force ledit au moins un panneau à se soulever. De préférence, ledit appui peut comporter au moins deux rampes inclinées ; un côté avant ou arrière d'au moins un panneau comporte au moins deux supports ; le panneau et les rampes sont configurés de telle sorte que pendant le transfert du panneau, lesdits au moins deux supports du panneau prennent appui respectivement sur lesdites au moins deux rampes, forçant ainsi le panneau à se soulever.
- en position de stockage, les panneaux sont disposés horizontalement les uns au-dessus des autres, formant une pile, et les côtés avant des panneaux sont disposés sur un côté latéral du groupe de panneaux.
- le dispositif de transfert comporte un monte-charge, configuré pour soulever la pile de panneaux.
- le kit est configuré de telle sorte qu'en position d'insertion, ledit au moins un panneau transféré est accroché aux autres panneaux du train de panneaux.
- un côté avant ou un côté arrière d'au moins un panneau est configuré de manière à pouvoir transmettre, directement ou via un connecteur, une traction au panneau suivant.
- le kit de construction est configuré de telle sorte que, pendant le transfert ou au plus tard à l'issue du transfert d'au moins un premier panneau devant être intégré à un train de panneaux, le train de panneaux ou le premier panneau est accroché à un côté avant d'un deuxième panneau destiné à être intégré au train de panneaux à la suite du premier panneau.
- le train de panneau ou le premier panneau est accroché au côté avant du deuxième panneau, notamment par un connecteur non extensible ;
- le kit de construction comprend en outre un connecteur configuré pour relier une moitié arrière du premier panneau au côté avant d'un deuxième panneau configuré pour être intégré au train de panneaux à la suite du premier panneau, le kit étant configuré de manière à permettre que, pendant le transfert du premier panneau, le côté arrière du premier panneau passe à proximité du côté avant du deuxième panneau, et le connecteur est alors mis en place de manière à relier le côté arrière du premier panneau au côté avant du deuxième panneau.
- ledit panneau comporte des supports sur son côté avant, comportant des roues dites roues avant ; et des supports sur son côté arrière, comportant des roues dites roues arrière ; les rails porteurs comportent une première surface de roulage pour les roues avant, une deuxième surface de roulage pour les roues arrière, et une ouverture d'insertion ; le kit est agencé de telle sorte que les roues arrière, pendant le transfert dudit panneau roulent sur lesdites rampes, puis roulent sur ladite deuxième surface de roulage, en passant par l'ouverture d'insertion au moment où elles passent d'une surface de la rampe à la deuxième surface de roulage.
- un côté arrière ou avant d'au moins un panneau est configuré de manière, lorsque le panneau est engagé sur les rails porteurs, à reposer directement ou indirectement sur un panneau adjacent, de manière à être maintenu en position suivant la direction verticale par ledit panneau adjacent.
- le kit de construction comporte un treuil, et le treuil et le dispositif de transfert sont configurés de telle sorte que, pour transférer au moins les panneaux autres que le panneau avant, on actionne le dispositif de transfert au moyen du treuil.

Une structure de protection conforme à la présente divulgation comprend donc une structure porteuse comportant une pluralité de rails porteurs parallèles, et un groupe de panneaux engagés sur les rails porteurs et supportés par ceux-ci ; les panneaux étant placés les uns à la suite des autres en appui sur les rails porteurs. La structure porteuse peut présenter tout ou partie des caractéristiques indiquées précédemment (sauf impossibilité technique). Les panneaux de la structure porteuse, au moment du montage, sont configurés pour être capables de coulisser le long des rails porteurs suivant une direction de montage. Cependant, à l'issue du montage, ils peuvent être bloqués en position fixe et perdre ainsi leur capacité à coulisser le long des rails porteurs.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1A est une vue schématique en perspective partielle d'une structure de protection en cours de construction, suivant un premier mode de mise en oeuvre de l'invention ;
- les figure 1B, 1C, 1D et 1E sont quatre vues schématiques en coupe longitudinale partielle de la structure de protection de la figure 1A, à quatre étapes successives de la construction ;
- la figure 2 est une vue schématique en perspective partielle d'un panneau en cours de montage, en appui sur une rampe et des rails servant pour la construction ;
- la figure 3 est une coupe dans un plan vertical des éléments représentés sur la figure 2 ;
- la figure 4 est un diagramme illustrant les différentes étapes d'un mode de mise en oeuvre du procédé de construction selon l'invention ;
- la figure 5A est une vue schématique en perspective d'une structure de protection en cours de construction, dans un deuxième mode de mise en oeuvre qui ne fait pas partie de la présente invention;
- les figures 5B, 5C et 5D sont des vues schématiques en perspective partielle de la structure de protection en cours de construction représentée sur la figure 5A, à trois étapes successives de l'accrochage d'un panneau à un panneau suivant ;
- la figure 6 est une vue schématique en perspective d'une structure de protection en cours de construction, dans un troisième mode de mise en oeuvre de l'invention ;
- la figure 7 est une vue schématique en perspective d'une structure de protection en cours de construction, dans un quatrième mode de mise en oeuvre de l'invention ; et
- les figure 8A, 8B et 8C sont trois vues schématiques en coupe longitudinale partielle d'une structure de protection en cours de construction, dans un cinquième mode de mise en oeuvre de l'invention, à trois étapes successives de sa construction.

### DESCRIPTION DETAILLEE DE L'INVENTION

Par souci de simplicité, les éléments ayant sensiblement la même fonction et/ou la même structure dans les différents modes de mise en oeuvre qui vont être présentés portent les mêmes signes de référence.

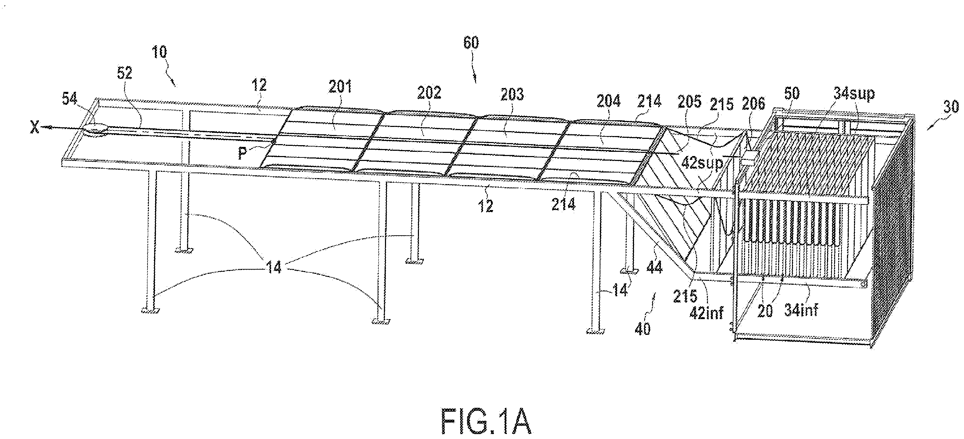

La construction d'une structure de protection suivant un premier mode de mise en oeuvre de l'invention va maintenant être présentée en relation avec les figures 1A-1E, 2, 3 et 4.

La structure de protection est montée en transférant des panneaux 20 progressivement depuis un conteneur 30 jusqu'à une structure porteuse 10. Le transfert se fait en déplaçant les panneaux suivant un axe de montage X horizontal, à partir du moment où les panneaux sont placés en appui sur la structure porteuse.

Bien que cela ne soit pas détaillé davantage par la suite, l'ensemble des composants mis en oeuvre sont symétriques par rapport au plan vertical contenant l'axe de montage X.

Les principaux constituants de la structure de protection sont une structure porteuse 10 et des panneaux 20. Les panneaux sont dénommés collectivement panneaux 20; ils sont de plus référencés individuellement panneau 201, panneau 202, etc.

La structure porteuse 10 peut être réalisée de nombreuses manières : Elle peut être une structure métallique, en bois, gonflable, en composite, etc.

Dans l'exemple présenté la structure est métallique, et est constituée principalement par un ensemble de rails assemblés ensemble, de manière connue en soi.

Ces rails se divisent principalement en deux rails porteurs 12, soutenus par un certain nombre de poteaux verticaux 14 fixés au sol.

Les rails porteurs 12 sont des profilés métalliques parallèles l'un à l'autre, disposés horizontalement. Dans d'autres modes de réalisation, il peut y avoir trois rails porteurs parallèles, voire davantage. Les rails porteurs 12 ont notamment pour fonction, lorsque les panneaux sont en position finale sur la structure, de maintenir les panneaux en place et de supporter le poids des panneaux, et d'éviter leur envol.

De plus, comme cela va être expliqué, les rails porteurs 12 servent à guider et supporter les panneaux 20 pendant leur transfert jusqu'à leur position finale.

Dans le cas présent, les rails 12 sont prévus aux extrémités latérales des panneaux ; ils pourraient également se trouver à des positions intermédiaires dans le sens de la largeur des panneaux (la largeur est mesurée suivant la direction perpendiculaire à la direction de montage X représentée sur la Fig.1A).

Dans d'autres modes de réalisation, un rail porteur supplémentaire peut être prévu à mi-distance entre les extrémités latérales des panneaux, pour réduire le porte-à-faux.

Les panneaux 20 sont des panneaux photovoltaïques rectangulaires.

Initialement, au commencement de la construction de la structure de protection, tous les panneaux 20 sont disposés parallèlement les uns aux autres dans un conteneur 30, en position de stockage. Le conteneur 30 est un conteneur ayant des dimensions et des caractéristiques extérieures standard pour le transport routier, maritime ou ferroviaire.

Dans le conteneur 30, les panneaux sont disposés verticalement (la direction perpendiculaire aux panneaux est horizontale ; plus précisément, elle est orientée suivant la direction de montage X). Les côtés des panneaux qui sont destinés à être disposés du côté avant (suivant la direction de montage X) sont disposés en haut (sur le côté supérieur des panneaux).

Le conteneur 30 comporte quatre rails de stockage, à savoir deux rails de stockage supérieurs 34sup, et deux rails de stockage inférieurs 34inf.

Dans cet exemple, tous les panneaux 20 sont identiques.

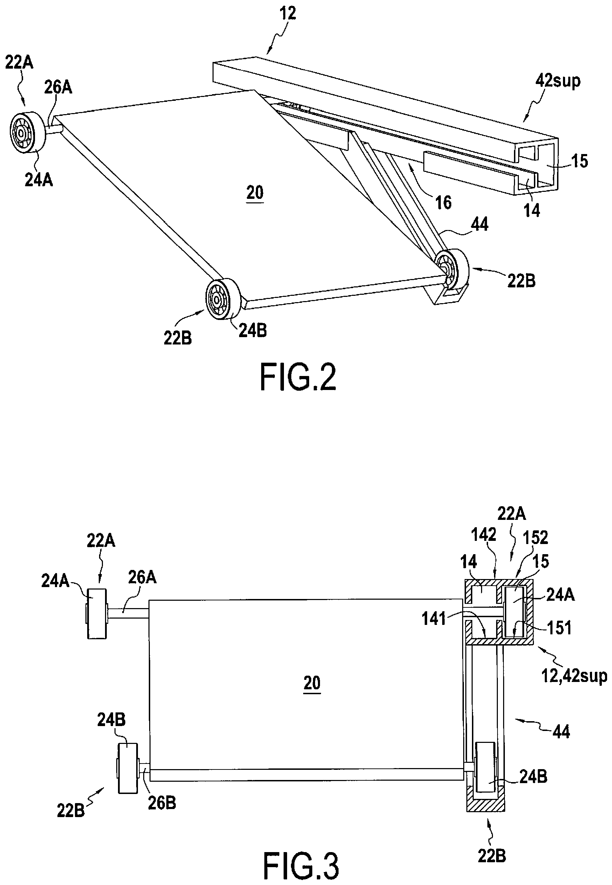

Chaque panneau 20 est équipé de quatre supports 22, à savoir deux supports avant 22A et deux supports arrière 22B (Fig.2,3). Chaque support 22 comprend principalement une roue (roues avant 24A, roues arrière 24B) et un moyeu fixé au panneau 20. Les deux roues 24A des supports 22A sont reliées par un arbre 26A fixé à l'avant du panneau 20 qui constitue le moyeu commun aux deux roues avant 24A. Les deux roues 24B des supports 22B sont reliées par un arbre 26B fixé à l'arrière du panneau 20 qui constitue le moyeu commun aux deux roues arrière 24B.

Naturellement, d'autres types de support peuvent être choisis comme supports pour les panneaux 20 : des chariots comportant chacun plusieurs roues, des patins configurés pour glisser dans ou sur les rails porteurs, etc.

Dans le conteneur 30, le côté avant de chacun des panneaux est relié au côté avant du panneau qui le suit par deux câbles (un câble du côté gauche, un câble du côté droit). Ces câbles sont dénommés collectivement câbles 21 ; ils sont de plus référencés par paires câbles 211 pour le panneau 201, câbles 212 pour le panneau 202, etc.

Chacun des rails porteurs 12 est un profilé métallique de section constante, ayant la forme générale de la lettre 'C' pour permettre le passage des arbres de roue sur une face latérale. La section de ces rails présente deux passages de roues 14,15. La partie inférieure de ces passages de roue 14 et 15 comporte respectivement une première surface de roulage 141 et une deuxième surface de roulage 151.

Chacun des passages de roue 14,15 est fermé ver le haut par une paroi horizontale (respectivement 142,152). Les parois 142 et 152 conjointement constituent une partie de prévention d'envol des rails porteurs 12, dans la mesure où elles empêchent que les roues 24A,24B ne se déplacent vers le haut (hormis un certain jeu naturellement), et ainsi empêchent les panneaux de se déplacer vers le haut, et ainsi de s'envoler si un coup de vent les soulever.

Les rails de stockage 34sup, 34inf ont la même section que les rails porteurs 12.

Lors de la construction de la structure de protection, dès que les panneaux sont placés en position d'insertion, leurs roues 24A,24B sont en appui sur les surfaces de roulage respectivement 151 et 141. Ainsi, les quatre angles de chaque panneau sont en appui (via les roues 24A,24B) sur les rails porteurs 12, que ce soit en position d'insertion, en position finale, et à chaque instant lors du déplacement des panneaux dès lors qu'ils sont en position d'insertion. Grâce à ces appui aux quatre angles, dans ces différentes positions le côté avant et le côté arrière des panneaux repose sur les rails porteurs 12 via des points d'appui qui sont les points d'appui des roues 24A,24B sur les surfaces de roulage 151 et 141.

Le transfert des panneaux 20 du conteneur 30 à la structure porteuse 10 est réalisé à l'aide d'un dispositif de transfert 40.

Le dispositif de transfert 40 comporte principalement des rails de transfert 42sup et 42inf, deux rampes 44 et un treuil 50.

Les rails de transfert 42sup et 42inf sont des rails ayant la même section que les rails porteurs 12.

Les rails de transfert 42sup sont disposés à la même hauteur que les rails porteurs 12 et les rails de stockage 34sup. Ils relient de manière continue les rails de stockage 34sup aux rails porteurs 12.

Les rails de transfert 42inf sont disposés à la hauteur des côtés inférieurs des panneaux ; ainsi en position de stockage, les roues arrières 24B des panneaux se trouvent dans les passages de roue des rails de transfert 42inf.

Le dispositif de transfert 40 comporte en outre un treuil 50, fixé en partie haute du conteneur 30 et équipé d'un câble de traction 52.

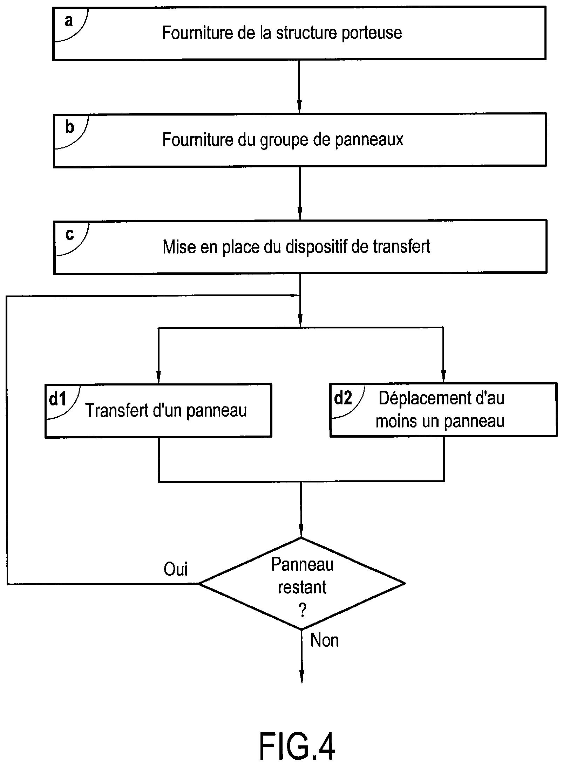

Les différentes étapes du procédé de construction de la structure de protection vont maintenant être présentées en relation avec les figures 1A-1E, 2 et 3 et le diagramme de la figure 4.

A l'étape a), on construit la structure porteuse 10 à partir de ses différents composants.

A l'étape b), on fournit le conteneur 30 contenant les panneaux 20, rangés verticalement côte à côte dans le conteneur 30. Chacun des panneaux 20 est en appui à la fois sur ses supports arrière 22B (les roues arrière 24B sont disposées dans les premiers passages de roue 14, en appui sur les surfaces de roulage 141 des rails de stockage inférieurs 34inf) et les supports avant 22A (les roues avant 24A sont disposées dans les deuxièmes passages de roue 15, en appui sur les surfaces de roulage 151 des rails de stockage supérieurs 34sup).

A l'étape c), on met en place le dispositif de transfert 40.

A l'étape d), on transfère les panneaux 20 de leur position de stockage dans le conteneur 30 à une position finale dans laquelle l'ensemble des panneaux sont supportés par les rails porteurs 12.

Ce transfert est fait en réalisant (éventuellement de manière itérative) les opérations suivantes de manière à transférer l'ensemble des panneaux 20 :
d1) on transfère un des panneaux 20 de la position de stockage à une position d'insertion dans laquelle le panneau considéré est en appui sur les rails porteurs 12 ;
d2) simultanément, on déplace les panneaux déjà en appui sur les rails porteurs le long de ceux-ci, suivant la direction de montage X.

Les panneaux transférés sont placés les uns à la suite des autres en appui sur les rails porteurs 12 et constituent peu à peu un train de panneaux 60 en appui sur les rails porteurs 12.

Au début de l'étape c), on déploie le câble 52 du treuil 50 de telle sorte que le câble 52 passe dans une poulie de renvoi 54 fixée à l'avant de la structure 10, et revienne jusqu'à un point d'attache P situé au milieu du côté avant du premier panneau 201. A l'aide du treuil 50, on tracte le panneau avant 201 à l'aide du câble 52. Sous l'effet de la traction qui lui est appliquée, le panneau avant 201 se met en place sur les rails porteurs 12 en position engagée. Il constitue alors le premier élément d'un « train de panneaux » 60 qui va progressivement être constitué pour réaliser la structure de protection.

Une fois que le panneau avant 201 a été mis en position d'insertion, les panneaux suivants sont tous montés de la même manière.

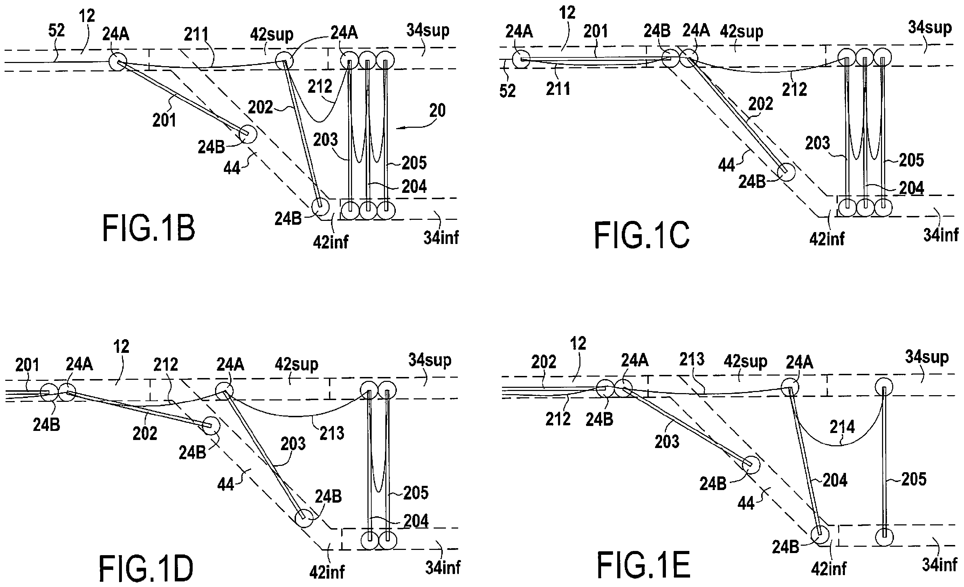

Le transfert d'un panneau 202 (à titre d'exemple) de sa position de montage à sa position d'insertion à l'arrière du train de panneaux (étape c1) va être maintenant expliqué en relation avec les figures 1B-1E. Ces figures représentent quatre instants t1, t2, t3 et t4 successifs du transfert du panneau 202 de sa position de stockage à sa position d'insertion sur la structure porteuse 10.

### Instant t1 (Fig.1B)

A l'instant t1, le transfert du panneau 201 de sa position de stockage à sa position d'insertion est presque terminé ; inversement, le transfert du panneau 202 commence.

A ce stade, le panneau 202 vient de se séparer du panneau 203 (qui est encore en position de stockage). Le côté avant du panneau 202 est tiré par les câbles 211, qui sont attachés au côté avant du panneau 201. Sous l'effet de cette traction, le côté avant du panneau 202 se déplace vers l'avant (dans la direction de montage X).

Les roues avant 24A du panneau 202 après avoir brièvement roulé sur le rail de stockage supérieur 34sup sont maintenant en appui sur le rail de transfert 42sup ; et les roues arrière 24B du panneau 202 après avoir brièvement roulé sur le rail de stockage inférieur 34inf et être passées sur le rail de transfert 42inf, viennent de s'engager sur les rampes 44. Les câbles 212 reliant le côté avant du panneau 202 au côté avant du panneau 203 ne sont pas encore tendus.

### Instant t2 (Fig.1C)

Les roues arrière 24B du panneau 201 viennent de passer dans les ouvertures d'insertion 16 (Fig.2) prévues en face inférieure des rails de transfert 42sup et sont maintenant en appui sur les surfaces de roulage 141 des premiers passages de roue 14. Le panneau 201 a donc atteint sa position d'insertion, en appui sur les rails porteurs 12.

Le transfert du panneau 202 vers sa position d'insertion est en cours. Au cours de ce mouvement, le panneau 202 est soulevé par le dispositif de transfert 40, du fait que ses roues arrière 24B s'élèvent en roulant sur les rampes 44 qui montent vers les rails 12, alors que ses roues avant 24A roulent vers l'avant (suivant la direction de montage X) dans le deuxième passage de roue 15 des rails 42sup.

Pendant le transfert du panneau 202, les câbles 212 qui relient l'avant du panneau 202 à l'avant du panneau 203 se tendent progressivement. Dès qu'ils sont tendus, le panneau 203 commence à se déplacer vers l'avant (dans la direction de montage X, Fig.1A) ; ses roues avant/arrière roulent d'abord dans les rails de stockage 34sup/34inf, puis dans les rails de transfert 42sup/42inf.

### Instant t3 (Fig.1D)

On continue à tirer le panneau avant 201 (qui constitue à ce stade le train de panneaux 60) vers l'avant à l'aide du treuil 50, via le câble 52.

Le panneau 202 est sur le point d'atteindre sa position d'insertion, ses roues arrière 24B remontent sur les rampes 44 mais ne sont pas encore passées par les ouvertures 16 et ne sont pas encore dans le premier passage de roues 14 des rails porteurs 12.

Le panneau 203 est en cours de transfert, sous l'effet de la traction qui lui est appliquée par les câbles 212 ; ses roues arrière viennent de s'engager sur les rampes 44.

Le panneau 202, puis derrière lui le panneau 203, pivotent peu à peu au cours de leurs transferts respectifs, tout en s'élevant, et se mettent progressivement et successivement en position horizontale au niveau des rails porteurs 12.

### Instant t4 (Fig. 1E)

Le panneau 202 vient de dépasser sa position d'insertion, et est maintenant intégré au train de panneaux 60. Celui-ci est donc à ce stade constitué par les panneaux 201 et 202, et se déplace suivant la direction de montage X. Juste derrière le panneau 202, le panneau 203 a effectué une grande partie de son transfert, et le panneau 204 a commencé lui aussi à se déplacer sous l'effet de la traction qui lui est appliquée par les câbles 213.

Au cours de son transfert, le panneau 202 se déplace uniquement sous l'effet de la traction qui lui est appliquée par les câbles 211 (étant noté que ses roues 24A et 24B restent en appui à tout moment sur les rails de stockage, de transfert, les rails porteurs et/ou les rampes, selon le cas).

La longueur des câbles 21 est calculée de telle sorte qu'en position d'insertion, le côté avant d'un panneau 20 se trouve juste derrière le côté arrière du panneau 20 précédent. Les câbles 21 constituent des connecteurs au sens de l'invention, et sont constitués par un matériau non extensible (en métal par exemple).

Dans ce mode de mise en oeuvre, les opérations d2) de déplacement du train de panneaux 60 et les opérations d1) de transfert des panneau 20 se produisent en même temps. Pendant le transfert d'un panneau 20 de sa position initiale à sa position d'insertion, le train de panneau 60 se déplace sensiblement de la longueur d'un panneau (suivant la direction de montage X).

L'ensemble des panneaux 20 sont ainsi successivement tirés hors du conteneur 30 et placés en position d'insertion. Chaque panneau 20, dès qu'il atteint sa position d'insertion, peut être considéré comme étant intégré au 'train de panneaux' 60. Il est alors déplacé progressivement vers l'avant au fur et à mesure que le treuil 50 tracte le câble 52.

Comme les roues 24A, 24B de chacun de ces panneaux 20 roulent dans les rails 12, les panneaux du train 60 peuvent se déplacer facilement le long des rails 12 suivant la direction de montage X.

Aussi, sous l'effet de la traction, successivement l'ensemble des panneaux 20 sont sortis hors du conteneur 30 et placés en position finale sur la structure porteuse 10.

Avantageusement, les opérations de montage des panneaux sont réversibles. Il est ainsi possible de démonter facilement et rapidement la structure de protection en réalisant les opérations inverses des opérations d1) et d2).

Les supports 22 des panneaux servent à la fois de moyens de support des panneaux en position de stockage dans le conteneur 30, et de moyens de support et de guidage, pendant le transfert des panneaux 20 de leur position de stockage à leur position d'insertion et jusqu'à leur position finale sur la structure 10.

De plus, les supports 22 servent aussi de support de maintien pour les panneaux. En effet, lorsqu'un panneau 20 est engagé sur les rails porteurs 12, comme les roues 24A et 24B respectivement sont astreintes à se déplacer uniquement suivant la direction X dans les passages de roue 14 et 15 des rails porteurs 12, cela empêche (au jeu près) tout mouvement de l'avant ou de l'arrière des panneaux vers le bas et vers le haut par rapport aux rails porteurs 12.

Dans cette position, grâce aux supports 22 reposant directement sur les rails 12, le côté avant et le côté arrière des panneaux sont en appui sur les rails porteurs 12, mais sans que le panneau 20 ne soit en appui, même partiel, que ce soit sur le côté avant ou le côté arrière, sur un panneau adjacent.

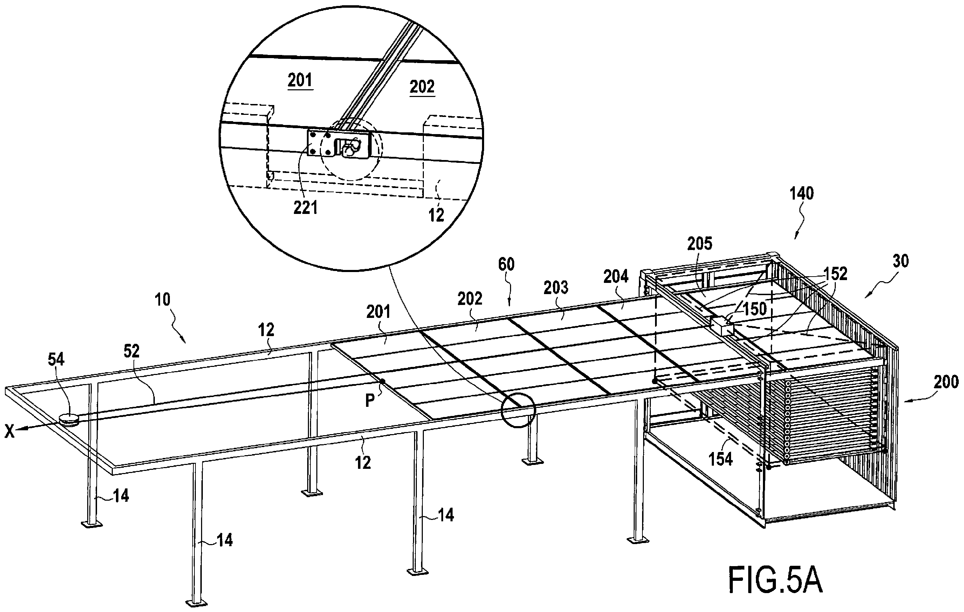

La construction d'une structure de protection suivant un deuxième mode de mise en oeuvre qui ne fait pas partie de la présente invention va maintenant être présentée en relation avec les figures 5A à 5D.

Ce mode de construction est assez similaire au mode de construction présenté précédemment. Aussi, sauf indication contraire, il convient de considérer que le deuxième mode de mise en oeuvre est identique au premier mode de mise en oeuvre.

Dans ce mode de mise en oeuvre, les panneaux 20 sont stockés horizontalement dans le conteneur 30 et forment une pile de panneaux 200.

Les panneaux 20 dans ce mode de mise en oeuvre sont légèrement différents des panneaux 20 du premier mode de mise en oeuvre.

Dans le cas présent, chacun des panneaux 20 comporte des supports avant 22A qui sont identiques aux supports avant 22A du premier mode de mise en oeuvre.

En revanche, le côté arrière des panneaux 20 comporte des supports 22B spécifiques, qui sont constitués par des crochets, appelés collectivement crochets 22. Chaque panneau 20 comporte ainsi deux crochets fixés aux deux extrémités de son côté arrière. (Le panneau 201 comporte deux crochets 221, le panneau 202 deux crochets 222, etc.)

L'accrochage d'un panneau 20 au panneau précédent ne se fait donc pas à l'aide des câbles 21 comme précédemment, mais à l'aide des crochets 22.

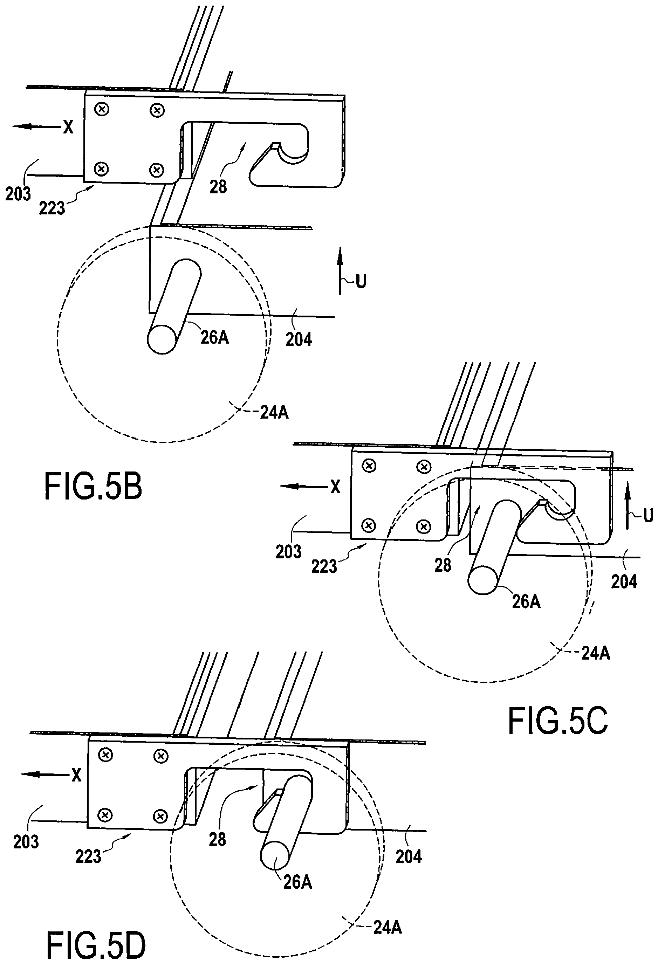

Les figures 5B, 5C et 5D représentent trois étapes de l'accrochage du panneau 204 au panneau 203. Le panneau 204 est lié ou accroché au panneau 203 au début de son transfert en position d'insertion, à l'aide de deux crochets 223 fixés au panneau 203.

Du côté arrière, chaque crochet 223 présente une partie en forme de crochet recourbé vers le bas ; chaque crochet 223 est ainsi formé de manière à pouvoir s'accrocher à l'axe 26A des roues avant 24A du panneau suivant 204, l'arbre 26A passant dans ce but dans un `passage d'arbre' 28 aménagé dans le crochet 223.

Le dispositif de transfert 140 utilisé pour transférer les panneaux 20 du conteneur 30 jusqu'à leur position d'insertion sur la structure porteuse 10 est configuré naturellement pour permettre ce mode d'accrochage des panneaux.

Ce dispositif de transfert 140 comporte un treuil 150, comme unique actionneur : ce treuil sert tout d'abord, comme précédemment, à tracter les panneaux du train de panneaux 60 suivant la direction de montage X à l'aide du câble 52, suivant la direction F ; mais de plus, le treuil 150, en association avec un ensemble de câbles 152 et un plateau 154, constitue un monte-charge qui permet de soulever ou hisser vers le haut la pile de panneaux 200.

Une autre particularité de ce mode de mise en oeuvre est que les rails porteurs 12 s'étendent jusqu'au conteneur 30; il n'y a pas de rails de transfert.

La construction de la structure de protection se fait de la manière suivante.

Dans une première étape a), on construit la structure porteuse 10.

Par ailleurs (étape b), on fournit la pile de panneaux 200, stockée dans le conteneur 30.

On met alors en place le dispositif de transfert (étape c).

Ensuite dans une étape d), on transfère les panneaux 20 de leur position de stockage dans le conteneur 30 à une position finale sur la structure porteuse 10.

Tout au début de l'étape d), on attache le câble 52 du treuil 50 au côté avant du panneau 201 en passant par la poulie 54.

On réalise ensuite les opérations suivantes :
- on hisse la pile de panneaux 200 de manière à porter le panneau situé en haut de la pile, dit 'panneau supérieur', au niveau des rails porteurs 12.
- dans le cas du premier panneau 201, on engage les roues avant 24A de celui-ci dans les rails porteurs 12 ;
- pour chacun des panneaux suivants, on accroche le côté arrière du dernier panneau engagé sur les rails porteurs au côté avant du panneau suivant.

Cette opération d'accrochage est illustrée par les figures 5B, 5C et 5D, qui représentent l'accrochage d'un 'deuxième panneau', le panneau 204, à un 'premier panneau', le panneau 203:
. on tire lentement le premier panneau 203 vers l'avant (suivant la direction de montage X) à l'aide du treuil 150 jusqu'à ce que les crochets 223 commencent à passer au-dessus du côté avant des panneaux restants dans le conteneur.

Cette situation correspond à l'instant t1 représenté sur la Fig.5B.
. Simultanément, on fait monter la pile de panneaux 200 (direction verticale montante indiquée par la flèche U).

Ces deux mouvements sont coordonnés de telle sorte que de chaque côté des panneaux 203 et 204, l'arbre 26A puisse s'engager dans le passage d'arbre 28.

A l'instant t1 (Fig.5B), l'arbre 26A des roues avant 22A du panneau 204 arrive juste en dessous de l'ouverture du passage d'arbre 28 aménagé dans le crochet 223.

. Le déplacement horizontal du panneau 203 et le mouvement vertical de la pile de panneaux 200 se poursuivent de telle sorte que l'arbre 26A s'engage dans le passage d'arbre 28. A l'instant t2 représenté sur la Fig.5C, l'arbre 26A est engagé dans le passage 28.

Immédiatement après, on débraye le treuil 150 des câbles 152, de telle sorte que la pile de panneaux 200 arrête de monter au moment où l'arbre 28 atteint le haut du passage 28.

Inversement, le panneau 203 continue à être tiré vers l'avant par le câble 52. L'arbre 26A se bloque donc à l'arrière du passage 28 (Fig.5D). Dans cette position, le panneau 204 est accroché au panneau 203: au fur et à mesure que l'on continue à tracter le train de panneaux vers l'avant, le panneau 204 se déplace également vers l'avant, de manière à venir en position d'insertion sur les rails porteurs 12, à être intégré au train de panneaux. Il est ensuite déplacé sur les rails porteurs 12 jusqu'à atteindre sa position finale.

Cette procédure est répétée à l'identique pour les différents panneaux. On réalise donc successivement les opérations d'accrochage des différents panneaux (étapes c1) pendant que l'on déplace le train de panneau 60 (étape c2) de manière à transférer l'ensemble des panneaux 20 jusqu'à leur position finale sur la structure porteuse 10.

Avantageusement dans ce mode de mise en oeuvre, le treuil 150 sert à la fois à tirer le train de panneaux 60 suivant la direction de montage (déplacement horizontal des panneaux) et à soulever vers le haut la pile de panneaux 200 (déplacement vertical ou levage de la pile de panneaux).

Une particularité de ce mode de mise en oeuvre est que le côté arrière des panneaux 20 ne comporte pas de supports 22B (de roues 24B). Dans le conteneur 30, les panneaux 20 sont seulement supportés par leurs supports avant 22A (à l'exception du dernier panneau naturellement).

Ainsi chaque panneau, à l'exception du dernier panneau, ne comporte que des supports avant 22A, mais pas de supports arrière. Le côté arrière de chaque panneau est donc configuré de manière à reposer, par l'intermédiaire des crochets 22, sur le panneau suivant (qui est adjacent). Ainsi c'est le panneau suivant, et plus précisément les supports avant 22A du panneau suivant qui assurent le maintien du côté arrière du panneau considéré suivant la direction verticale (à la fois vers le haut et vers le bas).

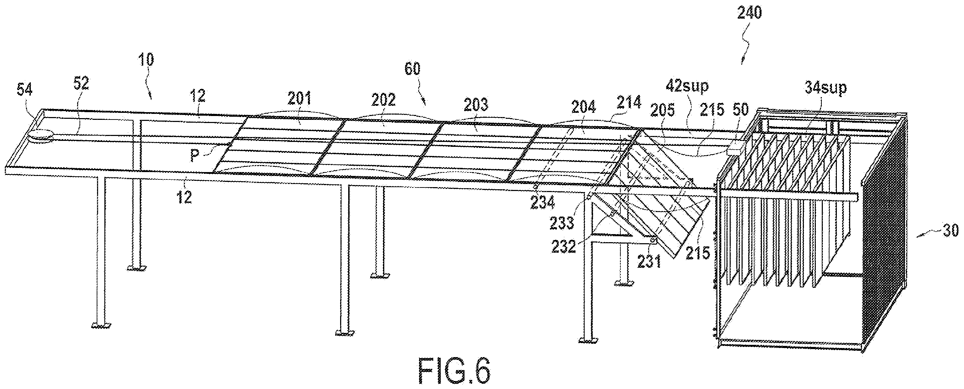

La construction d'une structure de protection suivant un troisième mode de mise en oeuvre de l'invention va maintenant être présentée en relation avec la figure 6. Ce troisième mode de mise en oeuvre est assez similaire au premier mode de construction présenté précédemment. Aussi, sauf indication contraire, il convient de considérer que le troisième mode de mise en oeuvre est identique au premier mode de mise en oeuvre.

Dans ce mode de mise en oeuvre, les panneaux 20 sont stockés verticalement côte à côte dans le conteneur 30. Ils sont de plus reliés les uns aux autres par des câbles 21 identiques aux câbles 21 utilisés dans le premier mode de mise en oeuvre.

Les étapes a), b), c) et d) de construction de la structure de protection sont sensiblement identiques aux étapes correspondantes du premier mode de mise en oeuvre.

La spécificité principale du troisième mode de mise en oeuvre tient au dispositif de transfert 240 utilisé pour déplacer les panneaux 20 du conteneur 30 à la structure porteuse 10.

En effet dans le premier mode de mise en oeuvre, le dispositif de transfert 40 comporte des rampes 44 qui soulèvent les roues arrière 24B des panneaux 20. Ces rampes constituent une partie des rails de transfert qui est en position inclinée.

Par contraste dans le troisième mode de mise en oeuvre, le dispositif de transfert 240 comporte des barres de levage 23 qui ont pour fonction de soulever les panneaux 20 lors de leur transfert en position d'insertion.

Ces barres (collectivement, les barres 23) sont référencées individuellement barre 231, barre 232, barre 233 et barre 234, en suivant l'ordre dans lequel elles interagissent avec un panneau pour le soulever progressivement, lors du montage de la structure de protection.

Ces barres 23 constituent des appuis solidaires de la structure porteuse 10 et sont en pratique fixées sur la structure porteuse 10.

Ce sont des barres horizontales, perpendiculaires à la direction de montage, et qui sont disposées à des hauteurs croissantes du côté avant du conteneur 30.

Les hauteurs des barres 23 sont fixées de telle sorte que pendant l'étape c1), les panneaux entrent successivement en contact avec les barres 231, 232, 233 et 234, ce qui contraint le ou les panneaux 20 en cours de transfert à se soulever.

La figure 6 représente une position intermédiaire atteinte par le panneau 204 lors de son transfert sur la structure porteuse.

Ce transfert se passe de la manière suivante.

Le transfert du panneau 205 (à titre d'exemple de panneau) commence lorsque les câbles 214 du panneau 204 se tendent. Le panneau 205 est alors tiré par le panneau 204, lui-même intégré au train de panneaux 60 et tiré par le treuil 50. Le côté avant du panneau 205 est tiré vers l'avant ; ses roues avant 24A roulent dans les rails de stockage 34sup puis dans les rails de transfert 42sup puis dans les rails porteurs 12.

A un certain instant, le panneau 205 entre en contact avec la première barre de levage 231, qui est la plus basse. Comme le côté avant du panneau 204 continue à progresser vers l'avant (direction de montage X), le panneau 205 est donc contraint de se soulever.

Lorsque le déplacement du côté avant 204 se poursuit, le panneau 205 entre ensuite successivement en contact avec les barres de levage 232, 233 et 234, ce qui le contraint à se soulever de plus en plus, jusqu'à atteindre finalement la position horizontale ; les roues avant et arrière du panneau 205 sont alors en appui dans les passages de roues 14 et 15, et le panneau 205 est en position d'insertion.

Au cours de ce déplacement, le panneau 205 pivote. La position des ouvertures d'insertion 16 sur les rails de transfert 42sup est disposée de telle sorte que les roues arrières 24B du panneau 205 (ou des autres panneaux) pendant le transfert puissent entrer dans les passages de roue 14, comme dans le premier mode de mise en oeuvre.

Dans le premier comme dans le troisième mode de mise en oeuvre, c'est la force de réaction appliquée aux panneaux par des appuis solidaires de la structure (rampes 44, barres de levage 23 respectivement) qui conduit les panneaux 20 à se soulever et à atteindre la position d'insertion. Naturellement, ces appuis peuvent prendre de nombreuses formes comme le montrent les exemples du premier et du troisième mode de mise en oeuvre.

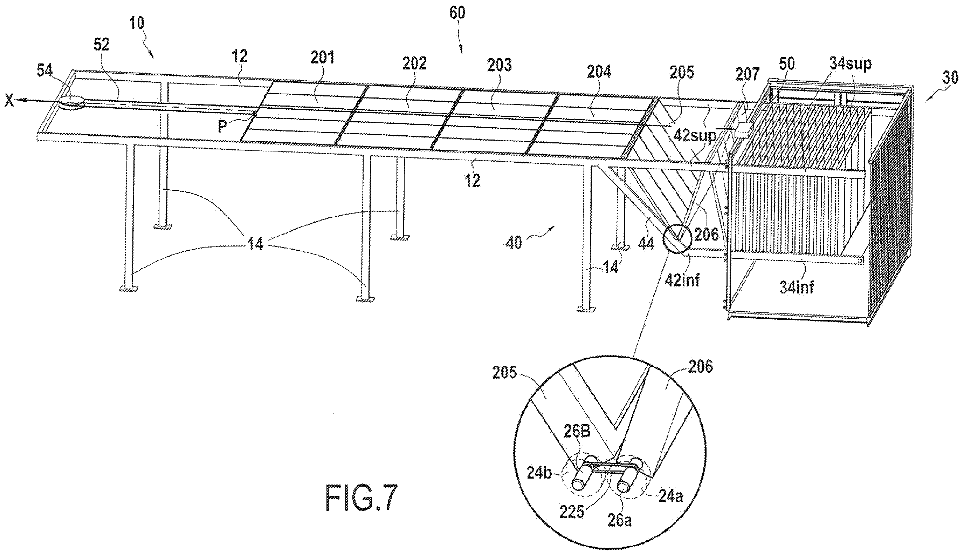

La construction d'une structure de protection suivant un quatrième mode de mise en oeuvre de l'invention va maintenant être présentée en relation avec la figure 7. Ce quatrième mode de mise en oeuvre est en grande partie similaire au premier mode de construction présenté précédemment. Aussi, sauf indication contraire, il convient de considérer que le quatrième mode de mise en oeuvre est identique au premier mode de mise en oeuvre.

Dans ce mode de mise en oeuvre, les panneaux 20 sont stockés verticalement côte à côte dans le conteneur 30.

Par ailleurs, contrairement aux modes de réalisation précédents, ils sont reliés les uns aux autres, et cela même en position de stockage. Plus spécifiquement, pour chaque panneau, le côté arrière du panneau est relié au côté avant du panneau suivant. Les panneaux se trouvent ainsi reliés 'en zig-zag' dans le conteneur 30.

Par conséquent pendant la construction de la structure de protection, lorsqu'un panneau est placé en appui sur les rails porteurs 12 et intégré au train de panneaux, et lorsqu'il est tiré vers l'avant, il entraîne à sa suite le panneau suivant, qui lui-même entraîne le panneau suivant, et ainsi de suite (Voir Fig.7).

La liaison peut être faite par tout moyen. Dans l'exemple proposé, chaque panneau 20 est identique aux panneaux 20 du premier mode de réalisation ; il comporte donc des supports 22A et 22B identiques aux supports 22A et 22B des panneaux utilisés dans le premier mode de mise en oeuvre, et représentés sur les figures 2 et 3.

Lors de leur transfert, les panneaux 20 sont maintenus et soulevés par leurs roues avant 24A et arrière 24B sensiblement de la même manière que dans le premier mode de mise en oeuvre :
Du côté supérieur, les roues avant 24A roulent successivement en appui sur les rails de stockage 34sup, puis les rails de transfert 42sup, puis les rails porteurs 12 ; du côté inférieur, les roues arrière 24B roulent en appui sur les rails de stockage inférieurs 34inf, les rails de transfert inférieurs 42inf, les rampes 44, puis les rails porteurs 12.

Au cours de ce mouvement il se peut que les roues de certains panneaux soient temporairement soulevées au-dessus des rails de transfert 42inf, les panneaux dont ces roues font partie étant alors seulement supportés par leurs roues en appui sur les rails de transfert supérieurs 42sup ; mais quoi qu'il en soit, la présence des rampes 44 garantit que les panneaux atteignent la position d'insertion, avec engagement de leurs roues arrières dans les rails de transfert 42sup.

Une vue de détail sur la figure 7 représente une partie de l'extrémité inférieure des panneaux 205 et 206.

Tant que les panneaux 205 et 206 ne sont pas disposés sensiblement dans le même plan, chacune des roues arrière 24B du panneau 205 est en contact avec une roue avant 24A correspondante du panneau 206. Les axes respectivement 26B et 26B de ces deux roues sont liés l'un à l'autre par un lien 225. (Tout autre dispositif de liaison, de préférence non extensible, pourrait convenir, par exemple un crochet reliant l'axe 26A du panneau 206 à l'axe 26B du panneau 205, etc.).

Grâce aux liens 225, lorsque le panneau 205 est transféré vers sa position d'insertion, puis vers sa position finale, il entraîne à sa suite le panneau 206.

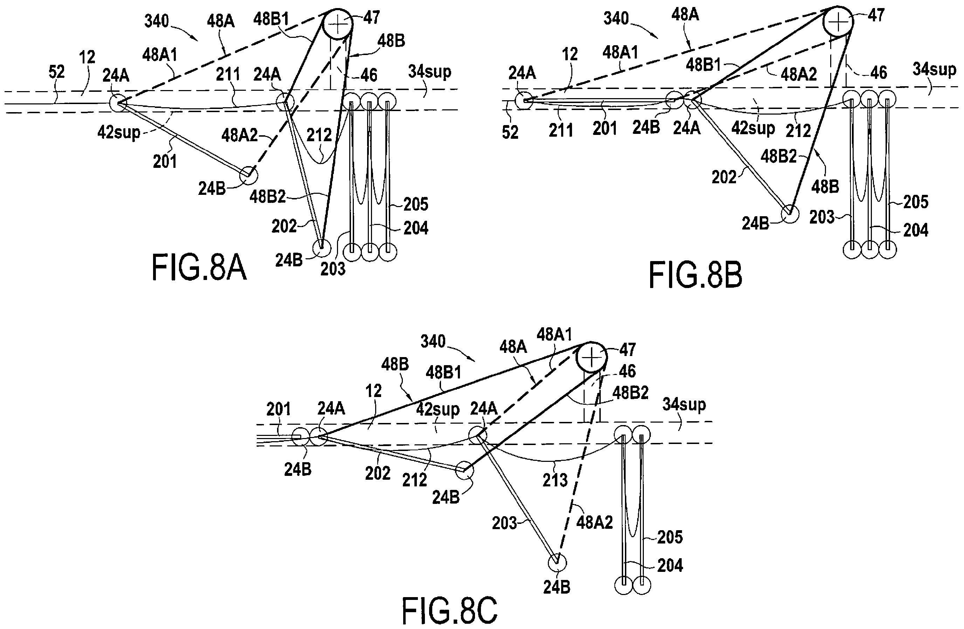

La construction d'une structure de protection suivant un cinquième mode de mise en oeuvre de l'invention va maintenant être présentée en relation avec la figures 8A à 8C.

Ce mode de réalisation est identique au premier mode de réalisation (Figs.1A à 1E), à l'exception des différences expliquées ci-dessous.

Dans le premier mode de réalisation, le dispositif de transfert comprend des rampes inclinées 44. Lors du transfert des différents panneaux, les roues arrière 24B des panneaux prennent appui sur ces rampes 44, ce qui contraint les panneaux à se soulever.

Dans le cinquième mode de mise en oeuvre, le dispositif de transfert 440 diffère du dispositif de transfert 40 en ce qu'il ne comporte pas de rampes inclinées 44. A la place, sur chaque rail de transfert supérieur (42sup) est monté un mât 46. Sur ce mât est montée une poulie double gorge 47. Deux élingues identiques 48A et 48B sont utilisés en association avec la poulie 47, de la manière indiquée par les Figs.8A-8C :
Lors du transfert, par exemple, d'un premier panneau 201 (Fig.8A), les extrémités de l'une de ces élingues (le câble 48A) ont été préalablement fixées aux côtés avant et arrière de ce premier panneau ; par exemple, aux arbres 26A,26B des roues 24A,24B. (Les mêmes opérations sont réalisées du côté gauche et du côté droit des panneaux). L'élingue 48A présente donc un premier brin 48A1 situé entre la poulie 47 et le côté avant du panneau 201, et un brin arrière 48A2 situé inversement entre la poulie 47 et le côté arrière du panneau 201.

En parallèle, les extrémités de l'autre élingue (élingue 48B) ont été préalablement fixées aux côtés avant et arrière du deuxième panneau 202, de la même manière que la première élingue 48A.

Comme dans le premier mode de réalisation, le panneau 201 est tiré vers l'avant, c'est-à-dire suivant la direction de montage, par le câble 52. Sous l'effet de cette traction, ses roues avant engagées sur les rails porteurs 12 se déplacent vers l'avant en roulant horizontalement sur ces rails. Ainsi, l'extrémité avant de l'élingue 48A reliée à l'avant du panneau 201 se déplace vers l'avant ; ce qui augmente la longueur du brin avant 48A1 et inversement réduit la longueur du brin arrière 48A2. Ce changement contraint l'arrière du panneau 201 à remonter, tout en se déplaçant vers l'avant. A l'issue de ce mouvement (Fig.8B), le panneau 201 a atteint une position horizontale, qui est la position d'insertion, dans laquelle les roues arrière 24B s'engagent dans les rails porteurs 12. L'élingue 48A est alors détachée du panneau 201, et fixée au troisième panneau 203.

Dans le même temps, le deuxième panneau 202 est tiré vers l'avant par le câble 211. Comme le premier panneau, tandis que les roues avant 24A du deuxième panneau 202 roulent vers l'avant sur les rails 12, l'arrière du deuxième panneau se soulève progressivement sous l'effet de la traction qui lui est appliquée par le brin arrière 48B2 de l'élingue 48B (Fig.8C). Dans l'étape ultérieure non représentée, à l'issue de ce mouvement de soulèvement le panneau 202 atteint la position d'insertion ; l'élingue 48B est détachée.

Ces opérations sont exécutées successivement jusqu'à ce que l'ensemble des panneaux aient été placés en position finale sur les rails 12.

Dans les différents modes de mise en oeuvre présentés, les panneaux 20 sont des panneaux photovoltaïques. Pour mettre en oeuvre les panneaux photovoltaïques, ceux-ci doivent naturellement ensuite être raccordés électriquement à une installation de conditionnement et/ou de stockage d'électricité.

Par ailleurs, l'invention peut naturellement être mise en oeuvre avec tous types de panneaux, notamment des panneaux sans module photovoltaïque.

La mise en place des panneaux suivant l'invention constitue généralement seulement la première phase de la construction de la structure de protection. La construction de la structure de protection comporte généralement d'autres étapes d'aménagement ultérieures, par exemple :
- Pose de joints ou autre entre les panneaux, ou mise en place d'une bâche sous les panneaux, pour assurer l'étanchéité du toit constitué par les panneaux ;
- Pose ou fabrication de parois verticales sur les côtés de la structure porteuse, afin de fermer l'espace intérieur aménagé sous les panneaux.

Bien que dans les modes de mise en oeuvre présentés, la force de traction appliquée au train de panneaux soit appliquée par un treuil, d'autres moyens peuvent être utilisés. Par exemple, le train de panneaux peut être déplacé, et notamment tracté, par un camion ou un tracteur agricole.

## Revendications

1. Procédé de construction d'une structure de protection, comprenant les étapes suivantes :
a) on fournit une structure porteuse (10) comportant une pluralité de rails porteurs (12) parallèles ;
b) on fournit un groupe de panneaux (20) stockés parallèlement les uns aux autres dans un conteneur, en position de stockage ;
les panneaux étant, en position de stockage, en appui sur des rails de stockage (34sup,34inf) dudit conteneur ;
les panneaux (20) et la structure porteuse (10) étant configurés de telle sorte que les panneaux puissent être engagés sur les rails porteurs et supportés par ceux-ci, et puissent alors coulisser le long de ceux-ci suivant une direction de montage (X) ;
c) on met en place un dispositif de transfert comportant des rails de transfert (42sup,42inf);
pendant la mise en place du dispositif de transfert (40,140,240), on dispose les rails de transfert de telle sorte que les rails de transfert relient les rails de stockage aux rails porteurs ; et
d) on transfère les panneaux (20) de la position de stockage à une position finale dans laquelle l'ensemble desdits panneaux sont supportés par les rails porteurs, en réalisant les opérations suivantes de manière à transférer l'ensemble des panneaux (20) :
d1) on transfère au moins un des panneaux (20) de la position de stockage à une position d'insertion dans laquelle ledit au moins un panneau est en appui sur les rails porteurs (12) ;
le transfert étant réalisé à l'aide du dispositif de transfert (40,140,240) soulevant ledit au moins un des panneaux vers le haut ;
les panneaux transférés étant placés les uns à la suite des autres en appui sur les rails porteurs ;
d2) on déplace au moins un panneau (60) le long des rails porteurs (12) suivant la direction de montage (X) ; et dans lequel,
pendant le transfert dudit au moins un des panneaux de la position de stockage à la position finale, ledit au moins un des panneaux est déplacé en étant continûment supporté successivement par les rails de stockage, les rails de transfert et les rails porteurs ;
le procédé de construction **se caractérisant en ce que**
le dispositif de transfert (40,240) comporte un appui (44,23) solidaire de la structure ; et
pendant l'étape d), au moins un panneau (20) entre en contact avec ledit appui ce qui force ledit au moins un panneau à se soulever.

2. Procédé de construction d'une structure de protection, comprenant les étapes suivantes :
a) on fournit une structure porteuse (10) comportant une pluralité de rails porteurs (12) parallèles ;
b) on fournit un groupe de panneaux (20) stockés parallèlement les uns aux autres dans un conteneur, en position de stockage ;
les panneaux étant, en position de stockage, en appui sur des rails de stockage (34sup,34inf) dudit conteneur ;
les panneaux (20) et la structure porteuse (10) étant configurés de telle sorte que les panneaux puissent être engagés sur les rails porteurs et supportés par ceux-ci, et puissent alors coulisser le long de ceux-ci suivant une direction de montage (X) ;
c) on met en place un dispositif de transfert comportant des rails de transfert (42sup,42inf);
pendant la mise en place du dispositif de transfert (40,140,240), on dispose les rails de transfert de telle sorte que les rails de transfert relient les rails de stockage aux rails porteurs ; et
d) on transfère les panneaux (20) de la position de stockage à une position finale dans laquelle l'ensemble desdits panneaux sont supportés par les rails porteurs, en réalisant les opérations suivantes de manière à transférer l'ensemble des panneaux (20) :
d1) on transfère au moins un des panneaux (20) de la position de stockage à une position d'insertion dans laquelle ledit au moins un panneau est en appui sur les rails porteurs (12) ;
le transfert étant réalisé à l'aide du dispositif de transfert (40,140,240) soulevant ledit au moins un des panneaux vers le haut ;
les panneaux transférés étant placés les uns à la suite des autres en appui sur les rails porteurs ;
d2) on déplace au moins un panneau (60) le long des rails porteurs (12) suivant la direction de montage (X) ; et dans lequel,
pendant le transfert dudit au moins un des panneaux de la position de stockage à la position finale, ledit au moins un des panneaux est déplacé en étant continûment supporté successivement par les rails de stockage, les rails de transfert et les rails porteurs ;
le procédé de construction **se caractérisant en ce que**
ledit au moins un panneau est de forme générale rectangulaire ayant quatre angles ; et
en position d'insertion et/ou en position finale, ou encore continûment lors d'un déplacement dudit au moins un panneau à l'étape d2) de la position d'insertion à la position finale, chaque angle dudit au moins un panneau repose directement ou indirectement sur les rails porteurs via au moins un point d'appui situé à une faible distance de l'angle considéré.

3. Procédé de construction selon la revendication 1 ou 2 dans lequel, en position finale, un côté avant et/ou un côté arrière dudit au moins un panneau est/sont en appui sur les rails porteurs (12), sans que ledit au moins un panneau ne soit en appui, même partiel, sur le ou les côtés considéré(s), sur un panneau adjacent.

4. Procédé de construction selon la revendication 1 ou 2 dans lequel, en position finale, un côté avant et/ou un côté arrière dudit au moins un panneau est/sont en appui sur les rails porteurs (12) via un ou des panneau(x) adjacent(s).

5. Procédé de construction selon l'une quelconque des revendications 1 à 4, dans lequel pendant l'étape de transfert d1) de la position de stockage à la position d'insertion, tous les panneaux effectuent un mouvement consistant en un mouvement initial de mise en place dans une position initiale, puis un mouvement principal de la position initiale à la position d'insertion ; le mouvement initial de la position de stockage à la position initiale étant soit une translation soit une rotation, et le mouvement principal étant le même pour tous les panneaux.

6. Procédé de construction selon l'une quelconque des revendications 1 à 5, dans lequel lors de l'étape d2), on déplace ledit au moins un panneau le long des rails porteurs de telle sorte que ledit au moins un panneau effectue une translation suivant la direction de montage (X).

7. Procédé de construction selon l'une quelconque des revendications 1 à 6, dans lequel un côté avant d'un premier panneau ou un côté arrière d'un panneau placé sur les rails porteurs à l'avant du premier panneau est accroché à un côté avant d'un deuxième panneau destiné à être engagé sur les rails porteurs à la suite du premier panneau, notamment pendant le transfert et au plus tard à l'issue du transfert du premier panneau (20).

8. Procédé de construction selon l'une quelconque des revendications 1 à 7, dans lequel à l'étape d), pendant le transfert d'un premier panneau, on fait passer un côté arrière du premier panneau à proximité d'un côté avant d'un deuxième panneau destiné à être engagé sur les rails porteurs à la suite du premier panneau, et on relie une moitié arrière du premier panneau à un côté avant du premier panneau.

9. Procédé de construction selon l'une quelconque des revendications 1 à 8, dans lequel un côté avant ou arrière d'au moins un panneau (20) comporte des supports de maintien (22A,22B), configurés de telle sorte que, lorsqu'un panneau est engagé sur les rails porteurs (12), ledit côté avant et/ou côté arrière du panneau ainsi engagé est maintenu par lesdits supports de maintien ; les supports de maintien engageant les rails porteurs de manière à empêcher un mouvement relatif dudit côté avant et/ou dudit côté arrière du panneau ainsi engagé par rapport aux rails porteurs vers le bas et/ou vers le haut.

10. Procédé de construction selon l'une quelconque des revendications 1 à 9, dans lequel en position d'insertion et/ou en position finale, ou encore continûment lors du déplacement dudit au moins un panneau à l'étape d2) de la position d'insertion à la position finale, une partie dudit au moins un panneau (20) est disposée sous une partie de prévention d'envol (142,152) d'un rail porteur (12).

11. Procédé de construction selon l'une quelconque des revendications 1 à 10, dans lequel ledit appui comporte au moins deux rampes (44) inclinées ; un côté avant ou arrière d'au moins un panneau (20) comporte au moins deux supports (22A,22B) ; le panneau et les rampes sont configurés de telle sorte que pendant le transfert du panneau, lesdits au moins deux supports du panneau prennent appui respectivement sur lesdites au moins deux rampes, forçant ainsi le panneau à se soulever.

12. Kit de construction de structure de protection, comprenant:
un conteneur (30);
un groupe de panneaux (20) disposés parallèlement les uns aux autres en position de stockage dans le conteneur ;
un ensemble de composants permettant la construction d'une structure porteuse (10) comportant une pluralité de rails porteurs (12) parallèles, et d'un dispositif de transfert (40,140,240) ;
les panneaux et la structure porteuse étant configurés de telle sorte que les panneaux puissent être engagés sur les rails porteurs et supportés par ceux-ci, et puissent alors coulisser le long de ceux-ci suivant une direction de montage ; et
le kit de construction étant configuré de manière à permettre le transfert des panneaux de la position de stockage à une position finale dans laquelle l'ensemble desdits panneaux sont supportés par les rails porteurs, en réalisant les opérations suivantes de manière à transférer l'ensemble des panneaux :
d1) transfert d'au moins un des panneaux de la position de stockage à une position d'insertion dans laquelle ledit au moins un panneau est en appui sur les rails porteurs ;
le transfert étant réalisé à l'aide du dispositif de transfert (40,140,240) soulevant ledit au moins un des panneaux vers le haut ;
les panneaux transférés étant placés les uns à la suite des autres en appui sur les rails porteurs ;
d2) déplacement d'au moins un panneau le long des rails porteurs suivant la direction de montage ;
le kit de construction de structure de protection **se caractérisant en ce que**
le dispositif de transfert (40,240) comporte un appui (44,23) solidaire de la structure ; et
pendant l'étape d), au moins un panneau (20) entre en contact avec ledit appui ce qui force ledit au moins un panneau à se soulever.

13. Kit de construction de structure de protection, comprenant:
un conteneur (30);
un groupe de panneaux (20) disposés parallèlement les uns aux autres en position de stockage dans le conteneur ;
un ensemble de composants permettant la construction d'une structure porteuse (10) comportant une pluralité de rails porteurs (12) parallèles, et d'un dispositif de transfert (40,140,240) ;
les panneaux et la structure porteuse étant configurés de telle sorte que les panneaux puissent être engagés sur les rails porteurs et supportés par ceux-ci, et puissent alors coulisser le long de ceux-ci suivant une direction de montage ; et
le kit de construction étant configuré de manière à permettre le transfert des panneaux de la position de stockage à une position finale dans laquelle l'ensemble desdits panneaux sont supportés par les rails porteurs, en réalisant les opérations suivantes de manière à transférer l'ensemble des panneaux :
d1) transfert d'au moins un des panneaux de la position de stockage à une position d'insertion dans laquelle ledit au moins un panneau est en appui sur les rails porteurs ;
le transfert étant réalisé à l'aide du dispositif de transfert (40,140,240) soulevant ledit au moins un des panneaux vers le haut ;
les panneaux transférés étant placés les uns à la suite des autres en appui sur les rails porteurs ;
d2) déplacement d'au moins un panneau le long des rails porteurs suivant la direction de montage ;
le kit de construction de structure de protection **se caractérisant en ce que**
ledit au moins un panneau est de forme générale rectangulaire ayant quatre angles ; et
le kit de construction de structure de protection est configuré de telle sorte que, en position d'insertion et/ou en position finale, ou encore continûment lors d'un déplacement dudit au moins un panneau à l'étape d2) de la position d'insertion à la position finale, chaque angle dudit au moins un panneau repose directement ou indirectement sur les rails porteurs via au moins un point d'appui situé à une faible distance de l'angle considéré.

14. Kit de construction selon la revendication 12 ou 13, configuré de manière à permettre la construction de la structure de protection en mettant en oeuvre le procédé de construction de structure de protection selon l'une quelconque des revendications 3 à 11.

15. Structure de protection construite à partir d'un kit de construction de structure de protection selon l'une des revendications 12 à 14.

## Patentansprüche

1. Herstellungsverfahren für eine Schutzstruktur, das die folgenden Schritte umfasst:
a) Bereitstellen einer Trägerstruktur (10), die eine Vielzahl von parallelen Tragschienen (12) beinhaltet;
b) Bereitstellen einer Gruppe von Platten (20), die parallel zueinander in einem Behälter in einer Lagerposition gelagert sind;
wobei die Platten in der Lagerposition auf Lagerschienen (34sup, 34inf) des Behälters aufliegen;
wobei die Platten (20) und die Trägerstruktur (10) derart konfiguriert sind, dass die Platten auf den Tragschienen eingesetzt und von diesen gestützt werden können und dann entlang einer Montagerichtung (X) entlang dieser gleiten können;
c) Errichten einer Überführungsvorrichtung, die Überführungsschienen (42sup, 42inf) umfasst;
Anordnen der Überführungsschienen während des Errichtens der Überführungsvorrichtung (40, 140, 240), derart, dass die Überführungsschienen die Lagerschienen mit den Tragschienen verbinden; und
d) Überführen der Platten (20) aus der Lagerposition in eine Endposition, in der die gesamten Platten von den Tragschienen getragen werden, indem die folgenden Vorgänge durchgeführt werden, um die gesamten Platten (20) zu überführen:
d1) Überführen mindestens einer der Platten (20) aus der Lagerposition in eine Einsetzposition, wobei die mindestens eine Platte auf den Tragschienen (12) aufliegt;
wobei das Überführen unter Verwendung der Überführungsvorrichtung (40, 140, 240) durchgeführt wird, die mindestens eine der Platten nach oben hebt;
wobei die überführten Platten nacheinander auf die Tragschienen platziert werden;
d2) Bewegen mindestens einer Platte (60) entlang der Tragschienen (12) in der Montagerichtung (X); und wobei
während des Überführens der mindestens einen Platte aus der Lagerposition in die Endposition die mindestens eine Platte bewegt wird, indem sie kontinuierlich nacheinander von den Lagerschienen, den Überführungsschienen und den Tragschienen getragen wird;
wobei das Herstellungsverfahren **dadurch gekennzeichnet ist, dass**
die Überführungsvorrichtung (40, 240) eine fest mit der Struktur verbundenes Lagerung (44, 23) beinhaltet; und
während des Schritts d) mindestens eine Platte (20) in Kontakt mit der Lagerung gelangt, die die mindestens eine Platte dazu zwingt, sich anzuheben.

2. Herstellungsverfahren für eine Schutzstruktur, das die folgenden Schritte umfasst:
a) Bereitstellen einer Trägerstruktur (10), die eine Vielzahl von parallelen Tragschienen (12) beinhaltet;
b) Bereitstellen einer Gruppe von Platten (20), die parallel zueinander in einem Behälter in einer Lagerposition gelagert sind;
wobei die Platten in der Lagerposition auf Lagerschienen (34sup, 34inf) des Behälters aufliegen;
wobei die Platten (20) und die Trägerstruktur (10) derart konfiguriert sind, dass die Platten auf den Tragschienen eingesetzt und von diesen gestützt werden können und dann entlang einer Montagerichtung (X) entlang dieser gleiten können;
c) Errichten einer Überführungsvorrichtung, die Überführungsschienen (42sup, 42inf) umfasst;
Anordnen der Überführungsschienen während des Errichtens der Überführungsvorrichtung (40, 140, 240), derart, dass die Überführungsschienen die Lagerschienen mit den Tragschienen verbinden; und
d) Überführen der Platten (20) aus der Lagerposition in eine Endposition, in der die gesamten Platten von den Tragschienen getragen werden, indem die folgenden Vorgänge durchgeführt werden, um die gesamten Platten (20) zu überführen:
d1) Überführen mindestens einer der Platten (20) aus der Lagerposition in eine Einsetzposition, wobei die mindestens eine Platte auf den Tragschienen (12) aufliegt;
wobei das Überführen unter Verwendung der Überführungsvorrichtung (40, 140, 240) durchgeführt wird, die mindestens eine der Platten nach oben hebt;
wobei die überführten Platten nacheinander auf die Tragschienen platziert werden;
d2) Bewegen mindestens einer Platte (60) entlang der Tragschienen (12) in der Montagerichtung (X); und wobei
während des Überführens der mindestens einen Platte aus der Lagerposition in die Endposition die mindestens eine Platte bewegt wird, indem sie kontinuierlich nacheinander von den Lagerschienen, den Überführungsschienen und den Tragschienen getragen wird;
wobei das Herstellungsverfahren **dadurch gekennzeichnet ist, dass**
die mindestens eine Platte eine im Allgemeinen rechteckige Form mit vier Winkeln aufweist; und
in der Einsetzposition und/oder in der Endposition, oder auch kontinuierlich während einer Bewegung der mindestens einen Platte in Schritt d2) aus der Einsetzposition in die Endposition, jeder Winkel der mindestens einen Platte direkt oder indirekt auf den Tragschienen über mindestens einen Lagerpunkt aufliegt, der sich in geringem Abstand zum betrachteten Winkel befindet.

3. Herstellungsverfahren nach Anspruch 1 oder 2, wobei in der Endposition eine Vorderseite und/oder eine Rückseite der mindestens einen Platte auf den Tragschienen (12) aufliegt/aufliegen, ohne dass die mindestens eine Platte auf der bzw. den betrachteten Seiten zumindest teilweise auf einer benachbarten Platte aufliegt.

4. Herstellungsverfahren nach Anspruch 1 oder 2, wobei in der Endposition eine Vorderseite und/oder eine Rückseite der mindestens einen Platte über eine bzw. mehrere benachbarte Platten auf den Tragschienen (12) aufliegt/aufliegen.

5. Herstellungsverfahren nach einem der Ansprüche 1 bis 4, wobei während des Schritts des Überführens d1) aus der Lagerposition in die Einsetzposition alle Platten eine Bewegung ausführen, die aus einer Anfangsbewegung zur Platzierung in einer Anfangsposition und dann einer Hauptbewegung aus der Anfangsposition in die Einsetzposition besteht; wobei die Anfangsbewegung aus der Lagerposition in die Anfangsposition entweder eine Verschiebung oder eine Drehung ist, und die Hauptbewegung für alle Platten gleich ist.

6. Herstellungsverfahren nach einem der Ansprüche 1 bis 5, wobei während des Schritts d2) die mindestens eine Platte derart entlang derTragschienen bewegt wird, dass die mindestens eine Platte eine Verschiebung entlang der Montagerichtung (X) durchführt.

7. Herstellungsverfahren nach einem der Ansprüche 1 bis 6, wobei eine Vorderseite einer ersten Platte oder eine Rückseite einer Platte, die auf den Tragschienen vor der ersten Platte platziert wurde, an einer Vorderseite einer zweiten Platte, die dazu bestimmt ist, nach der ersten Platte auf die Tragschienen eingesetzt zu werden, insbesondere während des Überführens oder spätestens nach dem Überführen der ersten Platte (20) befestigt wird.

8. Herstellungsverfahren nach einem der Ansprüche 1 bis 7, wobei in Schritt d) während des Überführens einer ersten Platte eine Rückseite einer ersten Platte in die Nähe einer Vorderseite einer zweiten Platte gebracht wird, die dazu bestimmt ist, nach der ersten Platte auf die Tragschienen eingesetzt zu werden, und eine hintere Hälfte der ersten Platte mit einer Vorderseite der zweiten Platte verbunden ist.

9. Herstellungsverfahren nach einem der Ansprüche 1 bis 8, wobei eine Vorder- oder Rückseite mindestens einer Platte (20) Haltestützen (22A, 22B) beinhaltet, die derart konfiguriert sind, dass beim Einsetzen einer Platte auf die Tragschienen (12) die Vorderseite und/oder Rückseite der auf diese Weise eingesetzten Platte von den Haltestützen gehalten wird; wobei die Haltestützen derart auf die Tragschienen eingesetzt sind, dass eine relative Bewegung der Vorderseite und/oder der Rückseite der auf diese Weise eingesetzten Platte in Bezug auf die Tragschienen nach unten und/oder oben verhindert wird.

10. Herstellungsverfahren nach einem der Ansprüche 1 bis 9, wobei in der Einsetzposition und/oder in der Endposition, oder auch kontinuierlich während der Bewegung der mindestens einen Platte in Schritt d2) aus der Einsetzposition in die Endposition, ein Teil der mindestens einen Platte (20) unter einem Teil zur Verhinderung eines Ablösens (142, 152) einer Tragschiene (12) angeordnet ist.

11. Herstellungsverfahren nach einem der Ansprüche 1 bis 10, wobei die Lagerung mindestens zwei geneigte Rampen (44) beinhaltet; eine Vorder- oder Rückseite mindestens einer Platte (20) mindestens zwei Stützen (22A, 22B) beinhaltet; die Platte und die Rampen derart konfiguriert sind, dass während des Überführens der Platte die mindestens zwei Stützen der Platte jeweils auf den mindestens zwei Rampen aufliegen und so ein Anheben der Platte erzwingen.

12. Bausatz für eine Schutzstruktur, der Folgendes umfasst:
einen Behälter (30);
eine Gruppe von Platten (20), die parallel zueinander in dem Behälter in einer Lagerposition angeordnet sind;
eine Anordnung aus Komponenten, die das Herstellen einer Trägerstruktur (10), die eine Vielzahl von parallelen Tragschienen (12) beinhaltet, und einer Überführungsvorrichtung (40, 140, 240) ermöglicht;
wobei die Platte und die Trägerstruktur derart konfiguriert sind, dass die Platten auf den Tragschienen eingesetzt und von diesen gestützt werden können und dann entlang einer Montagerichtung entlang dieser gleiten können; und
wobei der Bausatz derart konfiguriert ist, dass er das Überführen der Platten aus der Lagerposition in eine Endposition ermöglicht, in der die gesamten Platten von den Tragschienen getragen werden, indem die folgenden Vorgänge durchgeführt werden, um die gesamten Platten zu überführen:
d1) Überführen mindestens einer der Platten aus der Lagerposition in eine Einsetzposition, wobei die mindestens eine Platte auf den Tragschienen aufliegt;
wobei das Überführen unter Verwendung der Überführungsvorrichtung (40, 140, 240) durchgeführt wird, die mindestens eine der Platten nach oben hebt;
wobei die überführten Platten nacheinander auf die Tragschienen platziert werden;
d2) Bewegen mindestens einer Platte entlang der Tragschienen in der Montagerichtung;
wobei der Bausatz für eine Schutzstruktur **dadurch gekennzeichnet ist, dass**
die Überführungsvorrichtung (40, 240) eine fest mit der Struktur verbundene Lagerung (44, 23) beinhaltet; und
während des Schritts d) mindestens eine Platte (20) in Kontakt mit der Lagerung gelangt, die die mindestens eine Platte dazu zwingt, sich anzuheben.

13. Bausatz für eine Schutzkonstruktion, der Folgendes umfasst:
einen Behälter (30);
eine Gruppe von Platten (20), die parallel zueinander in dem Behälter in einer Lagerposition angeordnet sind;
eine Anordnung aus Komponenten, die das Herstellen einer Trägerstruktur (10), die eine Vielzahl von parallelen Tragschienen (12) beinhaltet, und einer Überführungsvorrichtung (40, 140, 240) ermöglicht;
wobei die Platte und die Trägerstruktur derart konfiguriert sind, dass die Platten auf den Tragschienen eingesetzt und von diesen gestützt werden können und dann entlang einer Montagerichtung entlang dieser gleiten können; und
wobei der Bausatz derart konfiguriert ist, dass er das Überführen der Platten aus der Lagerposition in eine Endposition ermöglicht, in der die gesamten Platten von den Tragschienen getragen werden, indem die folgenden Vorgänge durchgeführt werden, um die gesamten Platten zu überführen:
d1) Überführen mindestens einer der Platten aus der Lagerposition in eine Einsetzposition, wobei die mindestens eine Platte auf den Tragschienen aufliegt;
wobei das Überführen unter Verwendung der Überführungsvorrichtung (40, 140, 240) durchgeführt wird, die mindestens eine der Platten nach oben hebt;
wobei die überführten Platten nacheinander auf die Tragschienen platziert werden;
d2) Bewegen mindestens einer Platte entlang der Tragschienen in der Montagerichtung;
wobei der Bausatz für eine Schutzstruktur **dadurch gekennzeichnet ist, dass**
die mindestens eine Platte eine im Allgemeinen rechteckige Form mit vier Winkeln aufweist; und
der Bausatz für eine Schutzstruktur derart konfiguriert ist, dass in der Einsetzposition und/oder in der Endposition, oder auch kontinuierlich während einer Bewegung der mindestens einen Platte in Schritt d2) aus der Einsetzposition in die Endposition, jeder Winkel der mindestens einen Platte direkt oder indirekt auf den Tragschienen über mindestens einen Lagerpunkt aufliegt, der sich in geringem Abstand zum betrachteten Winkel befindet.

14. Bausatz nach Anspruch 12 oder 13, der derart konfiguriert ist, dass er das Herstellen der Schutzstruktur ermöglicht, indem das Herstellungsverfahren für eine Schutzstruktur nach einem der Ansprüche 3 bis 11 durchgeführt wird.

15. Schutzstruktur, die aus einem Bausatz für eine Schutzstruktur nach einem der Ansprüche 12 bis 14 hergestellt wurde.

## Claims

1. A method for constructing a protective structure, comprising the following steps:
a) providing a supporting structure (10) including a plurality of parallel supporting rails (12);
b) providing a group of panels (20) stored parallel to each other in a container, in the storage position;
the panels being, in the storage position, resting on storage rails (34sup, 34inf) of said container;
the panels (20) and the supporting structure (10) being configured such that the panels can be engaged on the supporting rails and supported by the latter, and can then slide along the latter in a mounting direction (X);
c) a transfer device including transfer rails (42up,42inf) is installed;
during the installation of the transfer device (40, 140, 240), the transfer rails are disposed such that the transfer rails connect the storage rails to the supporting rails; and
d) the panels (20) are transferred from the storage position to a final position wherein all said panels are supported by the supporting rails, by carrying out the following operations so as to transfer all the panels (20):
d1) at least one of the panels (20) is transferred from the storage position to an insertion position wherein said at least one panel rests on the supporting rails (12);
the transfer being carried out using the transfer device (40, 140, 240) lifting said at least one of the panels upwards;
the transferred panels being placed one after the other resting on the supporting rails;
d2) at least one panel (60) is moved along the supporting rails (12) in the mounting direction (X); and wherein,
during the transfer of said at least one of the panels from the storage position to the final position, said at least one of the panels is moved while being continuously supported successively by the storage rails, the transfer rails and the supporting rails;
the construction method being **characterised in that** the transfer device (40, 240) includes a support (44, 23) integral with the structure; and
during step d), at least one panel (20) contacts said support which forces said at least one panel to be lifted.

2. The method for constructing a protective structure, comprising the following steps:
a) a supporting structure (10) including a plurality of parallel supporting rails (12) is provided;
b) a group of panels (20) stored parallel to each other in a container, in a storage position, is provided;
the panels, in the storage position, resting on storage rails (34sup, 34inf) of said container;
the panels (20) and the supporting structure (10) being configured such that the panels can be engaged on the supporting rails and supported by the latter, and can then slide along the latter in a mounting direction (X);
c) a transfer device including transfer rails (42sup, 42inf) is installed;
during the installation of the transfer device (40, 140, 240), the transfer rails are disposed such that the transfer rails connect the storage rails to the supporting rails; and
d) the panels (20) are transferred from the storage position to a final position wherein all said panels are supported by the supporting rails, by carrying out the following operations so as to transfer all the panels (20):
d1) at least one of the panels (20) is transferred from the storage position to an insertion position wherein said at least one panel rests on the supporting rails (12);
the transfer being carried out using the transfer device (40, 140, 240) lifting said at least one of the panels upwards;
the transferred panels being placed one after the other resting on the supporting rails;
d2) at least one panel (60) is moved along the supporting rails (12) in the mounting direction (X); and wherein,
during the transfer of said at least one of the panels from the storage position to the final position, said at least one of the panels is moved while being continuously supported successively by the storage rails, the transfer rails and the supporting rails;
the construction method being **characterised in that** said at least one panel is of generally rectangular shape having four angles; and
in the insertion position and/or in the final position, or else continuously during movement of said at least one panel in step d2) from the insertion position to the final position, each angle of said at least one panel rests directly or indirectly on the supporting rails via at least one support point located at a short distance from the considered angle.

3. The construction method according to claim 1 or 2 wherein, in the final position, a front side and/or a rear side of said at least one panel is/are resting on the supporting rails (12), without said at least one panel resting, even partially, on the considered side(s), on an adjacent panel.

4. The construction method according to claim 1 or 2 wherein, in the final position, a front side and/or a rear side of said at least one panel is/are resting on the supporting rails (12) via one or more adjacent panel(s).

5. The construction method according to any one of claims 1 to 4, wherein during the step d1) of transfer from the storage position to the insertion position, all the panels carry out a movement consisting of an initial movement of placement in an initial position, then a main movement from the initial position to the insertion position; the initial movement from the storage position to the initial position being either a translation or a rotation, and the main movement being the same for all panels.

6. The construction method according to any one of claims 1 to 5, wherein during step d2), said at least one panel is moved along the supporting rails such that said at least one panel carries out a translation in the mounting direction (X).

7. The construction method according to any one of claims 1 to 6, wherein a front side of a first panel or a rear side of a panel placed on the supporting rails at the front of the first panel is hung on a front side of a second panel intended to be engaged on the supporting rails following the first panel, in particular during the transfer and at the latest after the transfer of the first panel (20).

8. The construction method according to any one of claims 1 to 7, wherein in step d), during the transfer of a first panel, a rear side of the first panel is passed close to a front side of a second panel intended to be engaged on the supporting rails following the first panel, and a rear half of the first panel is connected to a front side of the first panel.

9. The construction method according to any one of claims 1 to 8, wherein a front or rear side of at least one panel (20) includes holding supports (22A, 22B), configured such that, when a panel is engaged on the supporting rails (12), said front side and/or rear side of the panel thus engaged is held by said holding supports; the holding supports engaging the supporting rails so as to prevent relative movement of said front side and/or said rear side of the panel thus engaged relative to the supporting rails downwards and/or upwards.

10. The construction method according to any one of claims 1 to 9, wherein in the insertion position and/or in the final position, or else continuously during the movement of said at least one panel in step d2) from the insertion position to the final position, a part of said at least one panel (20) is disposed under a flight prevention part (142,152) of a supporting rail (12).

11. The construction method according to any one of claims 1 to 10, wherein said support includes at least two inclined ramps (44); a front or rear side of at least one panel (20) includes at least two supports (22A, 22B); the panel and the ramps are configured such that during the transfer of the panel, said at least two panel supports bear respectively on said at least two ramps, thus forcing the panel to be lifted.

12. A protective structure construction kit, comprising:
a container (30);
a group of panels (20) disposed parallel to each other in a storage position in the container;
a set of components allowing the construction of a supporting structure (10) including a plurality of parallel supporting rails (12), and a transfer device (40, 140, 240);
the panels and the supporting structure being configured such that the panels can be engaged on the supporting rails and supported by the latter, and can then slide along the latter in a mounting direction; and
the construction kit being configured so as to allow the transfer of the panels from the storage position to a final position wherein all said panels are supported by the supporting rails, by carrying out the following operations so as to transfer all the panels:
d1) transferring at least one of the panels from the storage position to an insertion position wherein said at least one panel rests on the supporting rails;
the transfer being carried out using the transfer device (40, 140, 240) lifting said at least one of the panels upwards;
the transferred panels being placed one after the other resting on the supporting rails;
d2) moving at least one panel along the supporting rails in the mounting direction;
the protective structure construction kit **characterised in that**
the transfer device (40, 240) includes a support (44, 23) secured to the structure; and
during step d), at least one panel (20) contacts said support which forces said at least one panel to be lifted.

13. The protective structure construction kit, comprising:
a container (30);
a group of panels (20) disposed parallel to each other in a storage position in the container;
a set of components allowing the construction of a supporting structure (10) including a plurality of parallel supporting rails (12), and a transfer device (40, 140, 240);
the panels and the supporting structure being configured such that the panels can be engaged on the supporting rails and supported by the latter, and can then slide along the latter in a mounting direction; and
the construction kit being configured so as to allow the transfer of the panels from the storage position to a final position wherein all said panels are supported by the supporting rails, by carrying out the following operations so as to transfer all the panels:
d1) transferring at least one of the panels from the storage position to an insertion position wherein said at least one panel rests on the supporting rails;
the transfer being carried out using the transfer device (40, 140, 240) lifting said at least one of the panels upwards;
the transferred panels being placed one after the other resting on the supporting rails;
d2) moving at least one panel along the supporting rails in the mounting direction;
the protective structure construction kit **characterised in that** said at least one panel is of generally rectangular shape having four angles; and
the protective structure construction kit is configured such that, in the insertion position and/or in the final position, or even continuously during movement of said at least one panel in step d2) from the insertion position to the final position, each angle of said at least one panel rests directly or indirectly on the supporting rails via at least one support point located at a short distance from the considered angle.

14. The construction kit according to claim 12 or 13, configured so as to allow the construction of the protective structure by implementing the protective structure construction method according to any one of claims 3 to 11.

15. A protective structure constructed from a protective structure construction kit according to one of claims 12 to 14.
